(19) Europäisches Patentamt
European Patent Office
Office européen des brevets

(11) **EP 2 960 073 B1**

(12) **EUROPEAN PATENT SPECIFICATION**

(45) Date of publication and mention
of the grant of the patent:
**10.08.2022 Bulletin 2022/32**

(21) Application number: **14174587.7**

(22) Date of filing: **26.06.2014**

(51) International Patent Classification (IPC):
**B60B 17/00** $^{(2006.01)}$  **B61H 5/00** $^{(2006.01)}$
**F16F 15/12** $^{(2006.01)}$  **F16F 15/14** $^{(2006.01)}$
**F16D 65/00** $^{(2006.01)}$  **F16D 65/12** $^{(2006.01)}$

(52) Cooperative Patent Classification (CPC):
**B61H 5/00; B60B 17/002; F16D 65/0018;**
**F16D 65/124; F16F 15/12; F16F 15/1414;**
B60B 17/0017; F16D 2055/0041; F16D 2065/138;
F16D 2065/1396

(54) **Running gear unit with reduced torsional vibration**

Fahrgestelleinheit mit reduzierter Torsionsschwingung

Unité d'engrenage de roulement avec une vibration torsionnelle réduite

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**30.12.2015 Bulletin 2015/53**

(73) Proprietor: **Bombardier Transportation GmbH**
**10785 Berlin (DE)**

(72) Inventors:
• **Bieker, Guido**
**57399 Kirchhundem (DE)**

• **Doerner, Heinz-Dieter**
**57647 Nistertal (DE)**

(74) Representative: **Cohausz & Florack**
**Patent- & Rechtsanwälte**
**Partnerschaftsgesellschaft mbB**
**Bleichstraße 14**
**40211 Düsseldorf (DE)**

(56) References cited:
**EP-B1- 1 551 646    DE-A1- 10 336 729**
**US-A- 4 392 681**

**Description**

BACKGROUND OF THE INVENTION

The present invention relates to a running gear unit, in particular for a rail vehicle, comprising a wheel unit, a first torsional vibration reduction mass unit, and a second torsional vibration reduction mass unit. The wheel unit comprises a wheel unit shaft and at least one wheel. The wheel unit shaft defines an axis of rotation, wherein the axis of rotation defines an axial direction and a radial direction of the wheel unit as well as a torsional direction about the axis of rotation. The wheel is coupled to the wheel unit shaft in a torsionally rigid manner about the axis of rotation and is configured to run on a track. The first torsional vibration reduction mass unit comprises a first torsional vibration reduction mass coupled to the wheel unit in a torsionally compliant manner about the axis of rotation, while the second torsional vibration reduction mass unit comprises a second torsional vibration reduction mass coupled to the wheel unit in a torsionally compliant manner about the axis of rotation. The first torsional vibration reduction mass and the second torsional vibration reduction mass each is configured to oscillate about the axis of rotation in counter-phase with respect to a component of the wheel unit, in particular, with respect to the wheel, to reduce torsional vibration of the wheel unit. The first torsional vibration reduction mass unit defines a first reduction resonant frequency of the counter-phase oscillation of the first torsional vibration reduction mass. The present invention also relates to a method of reducing torsional vibration in a running gear unit.

The wheel unit (typically a wheel set, a wheel pair but also single wheel units) typically is a crucial component in the design of a running gear for a rail vehicle. Beyond the traction and/or braking torques that have to be transmitted via the wheel unit to transmit the desired traction and/or braking power from the drive unit to the rail, typically, generally undesired mutual torsional vibrations between rotating masses connected to the wheel unit (e.g. between the wheels of a wheel set or between a wheel and the rotor of a driving motor in a single wheel unit) about the axis of rotation of the wheel set lead to high additional loads to the wheel unit shaft and the connection, typically a press fit, between the respective wheel and the wheel unit shaft.

These additional torsional moments (generated as a result of such torsional vibrations), unless actively or passively counteracted, may obtain such a level that the structural integrity of the wheel unit cannot be maintained and, in particular, the wheel may execute a rotational slipping motion on the wheel unit shaft at the level of the press fit between wheel and shaft.

An active approach in counteracting such torsional vibrations obviously lies in the traction and braking controller design, which strives to detect and counteract such torsional vibration events at a very early stage. However, such rapid torsional vibration detection requires highly sophisticated controller architecture and one or more suitable sensors allowing detection. Moreover, such torsional vibration events typically build up rapidly (typically within a few tenths of a second and at a frequency of 25 Hz to 150 Hz, typically 35 Hz to 95 Hz), which adds to the complexity of the complexity of the control architecture.

Generic passive approaches in counteracting such torsional vibrations are known, for example, from DE 103 36 729 A1 (Haban) and EP 1 551 646 B1 (Bieker et al.).

Both documents propose the use of passive torsional vibration reduction masses (such as e.g. brake discs) coupled in a torsionally compliant manner to the wheels of a wheel set, such that they can execute counter-phase oscillation which reduces the resulting amplitude of the torsional moments generated in the event of torsional vibration in the wheel set. Another example of passive torsional vibration reduction masses is known from US 4 392 681 A.

These known passive approaches, however, have the disadvantage that the torsional vibration reduction mass system has a specific reduction resonant frequency of the counter-phase oscillation, while the resonant frequency of the wheel unit varies considerably over time due to a reduction in the moment of inertia of the wheel unit caused by wear of the components of the wheel unit, in particular, wear of the running surface of the wheels (typically, reductions in the wheel radius of up to 40 mm are accepted prior to requiring exchange of the wheel). Hence, naturally, these known passive approaches are only optimized to a certain, comparatively short period in the lifecycle of the wheel unit, within which the resonant frequency of the vibration reduction mass system matches the resonant frequency of the wheel unit.

BRIEF DESCRIPTION OF THE INVENTION

The object for the present invention is therefore to provide a running gear unit and a method of reducing torsional vibration in a running gear unit of the type mentioned initially, which does not or at least to a lesser degree have the disadvantages mentioned above and which, in particular, in a simple and reliable manner allows efficient torsional vibration reduction over an extended period of time or usage, respectively, of the vehicle.

The present invention solves this problem on the basis of a running gear unit according to the preamble of claim 1 by means of the features indicated in the characterizing part of claim 1. The present invention further solves this problem on the basis of a method according to the preamble of claim 15 by means of the features indicated in the characterizing part of claim 15.

The present invention is based on the technical teaching that, in a simple and reliable manner, efficient torsional vibration reduction over an extended period of time or usage, respectively, of the vehicle may be achieved if the second torsional vibration reduction mass unit defines a second reduction resonant frequency of the counter-phase oscillation of the second torsional vibration reduction mass, which has an intentional and noticeable offset from the first reduction resonant frequency. By these mutually independent counter-phase oscillations of the first and second torsional vibration reduction mass it is possible, in a very simple manner, to optimize a passive vibration reduction system such that it is efficient in more than one state in the lifecycle of the wheel unit.

According to the invention one of the torsional vibration reduction mass units is tuned to a state of the wheel unit (i.e. to a torsional resonant frequency of the wheel unit), which is at least close to the new or unworn state of the wheel unit, respectively, such that efficient passive torsional vibration reduction in this new or unworn state is achieved. The other torsional vibration reduction mass unit is then tuned to a (later) used or worn state of the wheel unit, respectively, such that efficient passive torsional vibration reduction is also obtained at this later point in time of the lifecycle of the wheel unit. For example, the other torsional vibration reduction mass unit may be tuned to a state which is at least close to the fully worn state of the wheel unit (where exchange of the wheels of the wheel unit is required by the operator of the vehicle).

It will be appreciated that, with certain preferred embodiments of the invention, more than two torsional vibration reduction mass units with mutually offset reduction resonant frequencies may be provided, such that an even broader or improved coverage of the torsional vibration resonant frequency range (to be expected over the lifetime of the wheel unit) is obtained. Generally, as needed to provide proper torsional vibration reduction, an arbitrary number of such differently frequency tuned torsional vibration reduction mass units may be provided.

It will be further appreciated that, in the sense of the present invention, an intentional offset between two reduction resonant frequencies relates to an offset which is not merely caused by differences due to maximum manufacturing tolerances defined and acceptable, respectively, for the respective wheel unit. Rather, such an intentional offset caused by deliberate deviations in the design and/or arrangement of the respective torsional vibration reduction mass unit. Moreover, it will be appreciated that, in the sense of the present invention, such an intentional difference relates to mutually offset reduction resonant frequencies of the same order (e.g. of the first order) and not to differences between harmonics of different order.

Hence, according to one aspect, the present invention relates to a running gear unit, in particular for a rail vehicle, comprising a wheel unit, a first torsional vibration reduction mass unit, and a second torsional vibration reduction mass unit. The wheel unit comprises a wheel unit shaft and at least one wheel. The wheel unit shaft defines an axis of rotation, while the axis of rotation defines an axial direction and a radial direction of the wheel unit as well as a torsional direction about the axis of rotation. The wheel is coupled to the wheel unit shaft in a torsionally rigid manner about the axis of rotation and is configured to run on a track. The first torsional vibration reduction mass unit comprises a first torsional vibration reduction mass coupled to the wheel unit in a torsionally compliant manner about the axis of rotation. Furthermore, the second torsional vibration reduction mass unit comprises a second torsional vibration reduction mass coupled to the wheel unit in a torsionally compliant manner about the axis of rotation. The first torsional vibration reduction mass and the second torsional vibration reduction mass each are configured to oscillate about the axis of rotation in counter-phase with respect to a component of the wheel unit, in particular, with respect to the wheel, to reduce torsional vibration of the wheel unit. The first torsional vibration reduction mass unit further defines a first reduction resonant frequency of the counter-phase oscillation of the first torsional vibration reduction mass. The second torsional vibration reduction mass unit defines a second reduction resonant frequency of the counter-phase oscillation of the second torsional vibration reduction mass, which is of the same order as the first reduction resonant frequency and has an intentional offset from the first reduction resonant frequency. Preferably, the intentional offset exceeds an offset caused by maximum manufacturing tolerances defined for the running gear unit.

As mentioned above, the respective reduction resonant frequency may be tuned or matched to arbitrary torsional vibration resonant frequencies or frequency ranges, respectively, the wheel unit may show over its lifecycle. Preferably, the at least one wheel has an unworn state and a fully worn state, where exchange of the at least one wheel is required by an operator of the running gear unit. The torsional vibration of the wheel unit has a first wheel unit resonant frequency in the unworn state and a second wheel unit resonant frequency in the fully worn state. Hence, the first wheel unit resonant frequency and the second wheel unit resonant frequency define a wheel unit lifetime resonant frequency gap.

In this case, preferably, the first reduction resonant frequency is located in the area of the first wheel unit resonant frequency, in particular, substantially corresponds to the first wheel unit resonant frequency. In addition or as alternative, the second reduction resonant frequency is located in the area of the second wheel unit resonant frequency, in particular, substantially corresponds to the second wheel unit resonant frequency.

The difference between the first and second reduction resonant frequency may be chosen as a function of the torsional vibration reduction to be achieved at specific points within the lifetime of the wheel unit. In particular, the respective reduction resonant frequency may be adapted to the severity or amplitude, respectively, of the torsional vibration, which may vary over the wheel unit resonant frequency range (i.e. the different wheel unit resonant frequencies that develop over the lifetime of the wheel unit). Hence, in some preferable cases, it may be provided that the reduction resonant frequencies are tuned to different wheel unit resonant frequencies where peak amplitudes of the torsional vibration are to be expected.

With certain preferred embodiments of the invention, the first reduction resonant frequency differs from the first wheel unit resonant frequency by at most 50%, preferably at most 25%, more preferably by at most 5% to 15%, of the wheel unit lifetime resonant frequency gap. In In addition or as an alternative, the first reduction resonant frequency differs from the first wheel unit resonant frequency by at most 30%, preferably at most 20%, more preferably by at most 5% to 15%, of the first wheel unit resonant frequency. Both solutions have the advantage, that proper and elevated torsional vibration reduction is achieved in the initial part of the lifecycle of the wheel unit.

In addition or as an alternative, the second reduction resonant frequency preferably differs from the second wheel unit resonant frequency by at most 50%, preferably at most 25%, more preferably by at most 5% to 15%, of the wheel unit lifetime resonant frequency gap. In In addition or as an alternative, the second reduction resonant frequency differs from the second wheel unit resonant frequency by at most 30%, preferably at most 20%, more preferably by at most 5% to 15%, of the second wheel unit resonant frequency. Both solutions have the advantage, that proper and elevated torsional vibration reduction is achieved in the terminal part of the lifecycle of the wheel unit.

Furthermore, in addition or as alternative, the second reduction resonant frequency differs from the first reduction resonant frequency by 20% to 100%, preferably 30% to 80%, more preferably by 40% to 70%, of the wheel unit lifetime resonant frequency gap. Such a solution has the advantage that proper and elevated torsional vibration reduction is achieved over a comparatively large torsional vibration frequency band.

With further preferred embodiments of the invention, the second reduction resonant frequency differs from the first reduction resonant frequency by at least 2%, preferably by 5% to 25%, more preferably by 10% to 20%, of the first reduction resonant frequency. In addition or as alternative, with certain preferred embodiments of the invention, the second reduction resonant frequency differs from the first reduction resonant frequency by at least 2 Hz, preferably by 5 Hz to 35 Hz, more preferably by 10 Hz to 20 Hz. In any of these cases, proper and elevated torsional vibration reduction is achieved for a wide range of the wheel unit resonant frequencies.

It will be appreciated that the actual value of the respective reduction resonant frequency is selected as a function of the respective wheel unit resonant frequency to be counteracted, i.e. as a function of the actual design of the respective wheel unit. With certain preferred embodiments of the invention, the first reduction resonant frequency and/or the second reduction resonant frequency has a value from 25 Hz to 150 Hz, preferably from 30 Hz to 120 Hz, more preferably from 55 Hz to 115 Hz. These frequency values have proven to be suitable for a wide range of applications and wheel units, respectively, in particular, in the context of where units of typical rail vehicle applications.

It will be appreciated that, for certain applications, torsional vibration reduction at specific frequencies (i.e. mono frequency vibration reduction) or within comparatively narrow frequency bands (i.e. narrow frequency band vibration reduction) may be sufficient. Preferably, however, with certain preferred embodiments of the invention certain detuning of the frequency of the counter-phase oscillation in order to broaden the frequency band in which the respective torsional vibration reduction mass unit provides noticeable and sufficient torsional vibration reduction.

Such detuning can be obtained by any suitable means which provides broadening of the frequency band wherein the torsional vibration reduction mass executes counter-phase oscillation of sufficiently large amplitude to provide corresponding torsional vibration reduction. Preferably, such detuning is obtained via a corresponding damping of the counter-phase oscillation of the respective torsional vibration reduction mass. Hence, with certain preferred embodiments of the invention, the first torsional vibration reduction mass and/or the second torsional vibration reduction mass is coupled to the wheel unit via a damping link providing damping of the counter-phase oscillation.

Such damping can be obtained by any suitable means, e.g. any suitable damping elements connecting the wheel unit and the respective torsional vibration reduction mass. With preferred embodiments of very simple configuration, the damping link includes a frictional contact between the torsional vibration reduction mass and the wheel unit. In addition or as an alternative, the damping link may include a contact surface pairing defining a frictional damping characteristic of the damping link.

It will be appreciated that, in both cases, it is possible to properly adjust the damping effect in a very simple manner. Hence, the bandwidth of the counter-phase oscillation frequency band, over which torsional vibration reduction is achieved, may be adjusted in a very simple manner. This may be done via the parameters of the frictional contact surfaces and/or the contact force or pressure, respectively, acting between these frictional contact surfaces. Hence, fine-tuning of the counter-phase oscillation frequency band is available by fairly simple means. Hence, with preferred embodiments of the invention, the damping link is configured to adjust a counter-phase oscillation frequency band, in particular, to adjust a width of the counter-phase oscillation frequency band.

It will be appreciated that the amount of torsional vibration reduction to be achieved within the counter-phase oscillation frequency band may vary as a function of the amplitude of the torsional vibration on the wheel unit. Preferably, the counter-phase oscillation, in the counter-phase oscillation frequency band, provides reduction of the torsional vibration of the wheel unit by at least 40%, preferably at least 50%, more preferably at least 70%, compared to a reference state, where the torsional vibration reduction mass is missing or is torsionally rigidly coupled to the wheel unit. In these cases a particularly favorable reduction of torsional vibration may be achieved.

With further preferred embodiments of the invention, the at least one wheel has an unworn state with a first wheel unit resonant frequency and a fully worn state with a second wheel unit resonant frequency, the fully worn state requiring exchange of the at least one wheel. The first wheel unit resonant frequency and the second wheel unit resonant frequency further define a wheel unit lifetime resonant frequency gap, and the width of the counter-phase oscillation frequency band is at least 10%, preferably at least 15%, more preferably 10% to 65%, of the wheel unit lifetime resonant frequency gap.

It will be appreciated that, in the sense of the present invention, the respective reduction resonant frequency typically is the frequency within such a counter-phase oscillation frequency band where the counter-phase oscillation has its maximum amplitude.

It will be appreciated that the frictional contact providing the damping link functionality may be formed directly between the torsional vibration reduction mass and a component of the wheel unit itself. With certain preferred embodiments of the invention, however, the damping link comprises at least one intermediate element with at least one contact surface defining a frictional damping characteristic of the damping link. The use of such an intermediate element may greatly facilitate adjustment of the frictional damping characteristic and, consequently, of the bandwidth of the counter-phase oscillation frequency band.

The intermediate element may have a first contact surface contacting the wheel unit or the torsional vibration reduction mass in a first contact pairing and a second contact surface contacting a further component of the running gear unit in a second contact pairing. It will be appreciated that this further component of the running gear unit may be the other one of the torsional vibration reduction mass and the wheel unit. However, with other embodiments of the invention, this further component may be a further (eventually even substantially identically designed) intermediate element.

Preferably, the first contact pairing and/or the second contact pairing are configured to define the frictional damping characteristic of the damping link. By this means, very simple and precise fine-tuning of the frictional damping characteristic and, hence, of the bandwidth of the counter-phase oscillation frequency band may be achieved.

In addition or as alternative, at least one friction reducing contact surface participating in the second contact pairing may be configured to reduce a coefficient of friction prevailing in the second contact pairing compared to a first coefficient of friction prevailing in the first contact pairing. By this means, in a very simple manner, it may be precisely defined that the frictional relative motion providing the damping and detuning functionality takes place at the second contact pairing.

It will be appreciated that such a specific assignment of this damping and detuning functionality to a specific contact pairing may ensue either by providing an enhanced coefficient of friction at either one of the contact surfaces forming the contact pairing where no frictional motion is to take place.

In addition or as alternative, a reduced coefficient of friction may be provided at either one of the contact surfaces forming the contact pairing where frictional motion is to take place. The reduced coefficient of friction may be obtained by any suitable means. For example, a surface with a correspondingly reduced surface roughness may be provided. In addition or as an alternative, a hardened surface (obtained by any suitable hardening process) may be provided for the long term reduced coefficient of friction.

With certain preferred embodiments of the invention, at least one friction reducing contact surface participating in the first contact pairing and/or the second contact pairing comprises a friction reducing material, in particular a friction reducing coating. It will be appreciated that any desired and suitable friction reducing material may be used. Preferably, the friction reducing material comprises molybdenum (Mo) and/or stainless steel.

As already indicated above, with certain preferred embodiments of the invention, the damping link comprises at least one further intermediate element with a further contact surface defining the frictional damping characteristic of the damping link. The further intermediate element may, in particular, contact the intermediate element to define the frictional damping characteristic of the damping link. As outlined, such a further intermediate element may greatly facilitate adjustment of the damping characteristic.

It will be appreciated that the contact force or contact pressure, respectively, present at the respective contact pairing preferably is adjustable to provide the appropriate damping characteristic.

Hence, with certain preferred embodiments of the invention, the damping link comprises at least one contact surface pairing and a contact force adjustment device. The contact force adjustment device defines a contact force prevailing at the contact surface pairing, while the at least one contact surface pairing and the contact force define a frictional damping characteristic of the damping link.

Adjustment of the contact force or pressure, respectively, may be obtained in any suitable way. Preferably, the contact force adjustment device comprises a spring element defining the contact force. By this means, a very simple and reliable adjustment of the contact force or contact pressure, respectively, may be achieved.

With certain preferred embodiments of the invention, the damping link comprises at least one intermediate element; the at least one intermediate element contacting the wheel unit over a wheel unit contact surface and having a maximum diameter and/or a minimum diameter in the radial direction. Such an intermediate element has the advantage that it may introduce an additional thermal resistance between the torsional vibration reduction mass and the wheel unit reducing heat transfer from the torsional vibration reduction mass into the wheel unit. This is particularly beneficial if a brake disc is used as the respective torsional vibration reduction mass. For example, in such a case, problems resulting from increased heat input into the wheel unit from an associated brake disc (such as, for example, damage of a protective coating etc. of the wheel unit) can be alleviated due to the reduced heat input.

It will be appreciated that this additional thermal resistance may already be generated due to the mere presence of the intermediate element at an interface between the torsional vibration reduction mass and the wheel unit. Its two contact surfaces interfacing with the torsional vibration reduction mass and the wheel unit, due to the material discontinuity generated at the respective interface, already reduces conductive heat transfer into the wheel unit. Apparently, this additional thermal resistance can be further increased by selecting appropriate materials and/or an appropriate geometry and/or surface design at the respective interface.

It will be appreciated that, with certain preferred embodiments of the invention, the intermediate element, in the radial direction, extends beyond the wheel unit contact surface. By this means, a further reduction of the heat transfer from the torsional vibration reduction mass to the wheel unit can be achieved. For example, the intermediate element radially protruding beyond the respective contact surface may form a simple heat shield element reducing the amount of heat introduced into the wheel unit from the heated up torsional vibration reduction mass (as it is, for example, the case with a brake disc under heavy braking load), both via convective heat transfer and radiant heat transfer.

With certain preferred embodiments of the invention, the torsional vibration reduction mass associated to the intermediate element has a maximum reduction mass diameter in the radial direction and the intermediate element has a maximum intermediate element diameter in the radial direction, which is 50% to 120%, preferably 65% to 110%, more preferably 75% to 90%, of the maximum reduction mass diameter. In addition or as an alternative, the torsional vibration reduction mass associated to the intermediate element has a minimum reduction mass diameter in the radial direction and the intermediate element has a minimum intermediate element diameter in the radial direction, which is 50% to 120%, preferably 65% to 110%, more preferably 75% to 90%, of the minimum reduction mass diameter. Either of these variants provides proper and advantageous heat shielding of the wheel unit.

Hence, preferably, the intermediate element is configured as a heat shield element shielding the wheel unit from heat, in particular radiated heat, emitted from the associated torsional vibration reduction mass.

It will be appreciated that the intermediate element may be of any desired shape and configuration. In particular, the intermediate element may be a single component or composed of a plurality of separate components. Particularly simple and advantageous configurations are achieved if the intermediate element is a substantially ring-shaped element.

It will be further appreciated that the intermediate element may be composed of any desired and suitable materials material combinations. Preferably, the intermediate element comprises at least one sheet element, in particular, a sheet metal element. Such a configuration is particularly simple to manufacture and implement.

It will be further appreciated that a separate component may be used for the respective torsional vibration reduction mass, which has exclusively the function of providing torsional vibration reduction. With preferred embodiments of the invention, however, components of the running gear unit are used as a torsional vibration reduction mass, which have one or more further functions beyond the torsional vibration reduction. Such functional integration apparently is advantageous in terms of reducing the weight and the expense for the running gear unit.

As mentioned above, with certain preferred embodiments of the invention, the first torsional vibration reduction mass and/or the second torsional vibration reduction mass is a brake disc of a brake unit of the wheel unit.

It will be appreciated in this context that, in many a rail vehicle applications with an electric drive system providing electric (or regenerative) braking as the main type or preferred type of service brake, such brake discs are fairly rarely used during operation of the vehicle, namely only in emergency braking situations. Hence, such brake discs are fairly well-suited for providing torsional vibration reduction under most operating conditions of the vehicle, in particular under all braking situations where no use is made of the mechanical brakes.

It will be appreciated that the respective torsional vibration reduction mass may be connected to any desired part of the wheel unit. With certain preferred embodiments of the invention requiring only very few modifications in the overall design of the wheel unit, the first torsional vibration reduction mass and/or the second torsional vibration reduction mass is coupled to the wheel of the wheel unit, in particular, to a web element of the wheel.

With further preferred embodiments of the invention, the first torsional vibration reduction mass is coupled to a first side of the wheel and the second torsional vibration reduction mass is coupled to a second side of the wheel, in particular, to a web element of the wheel. In this case as well, very little modification to the design of the wheel (compared, for example, to conventional designs with wheel mounted brake discs) is necessary.

Both these cases have the two torsional vibration reduction masses mounted to one wheel on the wheel unit. Such a configuration is, for example, beneficial for wheel units with a single wheel (executing torsional vibration with respect to a rotating mass of the connected drive, such as e.g. the rotor of a drive motor driving the wheel). Nevertheless, such a configuration is also beneficial in configurations where the wheel unit comprises two mechanically coupled wheels (such as e.g. a wheel set). In particular, in the latter case, it may be sufficient to provide such a pair of first and second torsional vibration reduction masses only at one of the two wheels of the wheel unit.

With other preferred embodiments of the invention, the first torsional vibration reduction mass is coupled to a first wheel of the wheel unit and the second torsional vibration reduction mass is coupled to a second wheel of the wheel unit. It will be appreciated that, in these cases, either one of the first and second torsional vibration reduction mass may in itself be formed by the two rigidly connected brake discs provided for the respective wheel as they are known, for example, from EP 1 551 646 B1 (Bieker et al.).

With other preferred embodiments of the invention, the first torsional vibration reduction mass and the second torsional vibration reduction mass are coupled to a first wheel of the wheel unit while a third torsional vibration reduction mass and a fourth torsional vibration reduction mass are coupled to a second wheel of the wheel unit. Here, some or even all of the reduction resonant frequencies of the torsional vibration reduction mass is maybe mutually offset as it has been outlined above. Hence, up to four different reduction resonant frequencies may be implemented in such a case providing a very broadband vibration reduction.

Furthermore, with certain preferred embodiments of the invention, the first torsional vibration reduction mass and/or the second torsional vibration reduction mass is coupled to the wheel unit shaft, in particular, at a location remote from the wheel. This variant is particularly beneficial, for example, for wheel unit designs where building space restrictions or other reasons do not allow mounting the torsional vibration reduction mass to the wheel itself.

It will be appreciated that arbitrary combinations of the options for mounting the torsional vibration reduction masses as outlined above may be implemented as well.

It will be appreciated that the torsional compliance connection between the respective torsional vibration reduction mass and the wheel unit may be implemented in any desired and suitable way allowing appropriate counter-phase oscillation of the torsional vibration reduction mass.

Preferably, the first torsional vibration reduction mass and/or the second torsional vibration reduction mass is coupled to the wheel unit via at least one torsional linking arrangement, in particular, via a plurality of the torsional linking arrangements distributed along a circumferential direction of the torsional vibration reduction mass. This torsional linking arrangement is compliant in the circumferential direction and comprises a first support element, a second support element, and a first spring element. The first support element is connected to one of the wheel unit and the torsional vibration reduction mass in a manner rigid in the circumferential direction. Similarly, the second support element is connected to the other one of the wheel unit and the torsional vibration reduction mass in a manner rigid in the circumferential direction. The first spring element is arranged and acts kinematically in series between the first support element and the second support element to provide the compliance of the linking arrangement at least in a first torsional direction along the circumferential direction.

By this means, very simple and reliable torsionally compliant connection may be achieved. Moreover, the spring element may be easily tuned to the desired reduction resonant frequency. Furthermore, in cases where braking discs are used as the torsional vibration reduction masses, the spring element may be easily configured such that proper support to (maximum) braking moments is provided via the at least one torsional linking arrangement exclusively by the elastic counterforce of the spring element(s). Hence, in these cases, no additional hard stops are necessary (between the braking disc and the wheel unit) for transmitting such braking moments

It will be appreciated that one single spring element operating in both (circumferential) directions may be sufficient. With other preferred embodiments of the invention, however, the torsional linking arrangement comprises a third support element and a second spring element. The third support element is connected to the other one of the torsional vibration reduction mass and the wheel unit in a manner rigid in the circumferential direction, while the second spring element is arranged and acts kinematically in series between the first support element and the third support element to provide the compliance in the circumferential direction of the torsional linking arrangement in a second torsional direction opposite to the first torsional direction.

Such a configuration is particularly suitable for replacement solutions where conventional sliding blocks (allowing mutual radial thermal expansion between the brake disc and the wheel) are replaced by such a torsional linking arrangement in order to transform conventional braking discs into torsional vibration reduction masses in the sense of the present invention. Such a configuration is particularly beneficial since it requires virtually no noticeable modification to the conventional structural design.

The respective may have any desired and suitable configuration. Preferably, the first spring element and/or the second spring element is formed by a leaf spring element. In addition or as an alternative, the first spring element and/or the second spring element is formed by at least one section of a generally ring shaped element, the generally ring shaped element, in particular, integrating at least a part of the first support element and/or integrating at least a part of the second support element. This allows particularly simple designs which, in addition, our highly suitable for replacing conventional sliding blocks in replacement solutions as they have been described above. Such generally ring shaped elements integrating at least part of the first support element may, for example, be formed by a generally C-shaped recess within the spring element.

With further preferred embodiments of the invention, the first spring element and/or the second spring element is formed by a leaf spring element releasably connected to the first support element and/or the second support element. This configuration as well is particularly suited for replacing such conventional sliding blocks. In particular, the conventional sliding block has just to be laterally cut out to provide sufficient space for holding and receiving the respective spring element. Hence, transformation of such a conventional brake disc arrangement into a torsional vibration reduction configuration may be implemented in a very simple manner.

As mentioned above, preferably, a rigidity of the first spring element and/or the second spring element is selected such that a maximum torsional moment to be transmitted during operation of the running gear unit about the rotational axis between the torsional vibration reduction mass and the wheel unit is taken exclusively by elastic deformation of the spring element of the at least one torsional linking arrangement. Hence, there is no need for any hard stops between the torsional vibration reduction mass and the wheel unit in order to transmit such torsional moments.

Preferably, a rigidity of the first spring element and/or the second spring element is selected such that a maximum torsional moment to be transmitted during operation of the running gear unit about the rotational axis between the torsional vibration reduction mass and the wheel unit causes a maximum deflection of the spring element, in particular, in the torsional direction, by less than 1.0 mm, preferably less than 0.5 mm, more preferably 0.1 mm to 0.05 mm. By this means, very compact configurations may be achieved, which may be easily integrated into conventional wheel unit designs.

With preferred embodiments of the invention, the torsional linking arrangement allows mutual thermal expansion between the torsional vibration reduction mass and the wheel unit in a manner similar to conventional sliding blocks. Hence, preferably, the torsional linking arrangement is configured to allow thermally induced expansion in the radial direction between the first torsional vibration reduction mass and/or the second torsional vibration reduction mass and the wheel unit.

Generally, the torsional linking arrangement may be of any desired and suitable design. With certain preferred embodiments of the invention, which are of particular simple and robust yet flexible design, the torsional linking arrangement comprises a sheet element unit comprising at least one sheet element integrating at least a part of the first spring element and/or at least a part of the second spring element and at least a part of the first support element and/or at least a part of the second support element.

It will be appreciated that the sheet element may be of any desired and suitable material. Preferably, the at least one sheet element is a sheet metal element, yielding a very simple to manufacture component. Preferably, the at least one sheet element is cut, in particular, die-cut and/or laser-cut, and/or water-jet-cut to form the first spring element and/or the second spring element.

With certain preferred embodiments of the invention, the sheet element unit comprises a plurality of the sheet elements stacked along the axial direction to form the linking arrangement. This configuration has the great advantage that the offset in the (first and second) reduction resonant frequencies may simply be obtained via a different number of such sheet elements used for the respective linking arrangement. Moreover, particularly precise fine-tuning of the respective reduction resonant frequency may be obtained by using sheet elements of different thickness.

Hence, with certain preferred embodiments of the invention, the first torsional vibration reduction mass is coupled to the wheel unit via at least one first torsional linking arrangement and the second torsional vibration reduction mass is coupled to the wheel unit via at least one second torsional linking arrangement, the first torsional linking arrangement comprising a different number of the sheet elements stacked along the axial direction than the second torsional linking arrangement to provide the offset between the first reduction resonant frequency and the second reduction resonant frequency.

It will be appreciated that the respective torsional vibration reduction mass may be mounted in any desired and suitable way to the wheel unit. With certain preferred embodiments of the invention, the first torsional vibration reduction mass is coupled to a web element of the wheel unit on a first axial side of the web element and the second torsional vibration reduction mass is coupled to the wheel unit on a second axial side of the web element, while the first torsional vibration reduction mass and the second torsional vibration reduction mass are coupled along the axial direction by an axial linking arrangement. By this axial linking arrangement it is possible, for example, to adjust the contact force between the respective torsional vibration reduction mass and the web element, thereby defining the frictional damping characteristic and, hence, the broadening of the effective counter-phase oscillation frequency band as it has been outlined above.

The web element as mentioned above may be any web element allowing proper connection of the torsional vibration reduction mass. For example, it may be a web element mounted to the shaft and carrying one or more brake discs as the torsional vibration reduction masses. With certain preferred embodiments of the invention, the web element is a web element of the wheel.

Preferably, the axial linking arrangement allows torsional motion between the first torsional vibration reduction mass and/or the second torsional vibration reduction mass and the web element about the axial direction, such that proper individual counter-phase oscillation of the respective torsional vibration reduction mass is enabled without further effort.

It will be appreciated that the axial linking arrangement itself may provide some compliance in the circumferential direction (i.e. about the axis of rotation). With particularly simple to manufacture embodiments of the invention, the axial linking arrangement is coupled to the web element in a torsionally rigid manner about the axis of rotation.

As mentioned above, more than two torsional vibration reduction mass units may be provided in order to more evenly cover a broad frequency band of torsional vibration reduction. Hence, with certain preferred embodiments of the invention, at least a third torsional vibration reduction mass unit is provided, the third torsional vibration reduction mass unit comprising a third torsional vibration reduction mass coupled to the wheel unit in a torsionally compliant manner about the axis of rotation. The third torsional vibration reduction mass is configured to oscillate about the axis of rotation in counter-phase with respect to a component of the wheel unit, in particular, with respect to the wheel, to reduce torsional vibration of the wheel unit. The third torsional vibration reduction mass unit defines a third reduction resonant frequency of the counter-phase oscillation of the third torsional vibration reduction mass, wherein the third reduction resonant frequency is of the same order as the first reduction resonant frequency and has an further intentional offset from the first reduction resonant frequency and/or from the second reduction resonant frequency.

Here as well, the further intentional offset preferably exceeds an offset caused by maximum manufacturing tolerances defined for the running gear unit. In addition or as alternative, the intentional offset between the first reduction resonant frequency and the second reduction resonant frequency is a first intentional offset and the further intentional offset is a second offset, the second offset being 10% to 90%, preferably 25% to 75%, more preferably 40% to 60%, of the first intentional offset. By this means particularly even coverage of a broad frequency band of torsional vibration reduction may be achieved.

With certain preferred embodiments of the invention, the third reduction resonant frequency is located between the first reduction resonant frequency and the second reduction resonant frequency. This also provides the even coverage of the of a broad frequency band of torsional vibration reduction.

The present invention further relates to a running gear, in particular for a rail vehicle, with at least one running gear unit according to the invention. Herewith, the variants and advantages of the running gear unit according to the invention as outlined above may be realized to the same extent, such that reference is made in so far to the explanations given above.

Finally, according to a further aspect, the present invention further relates to a method of reducing torsional vibration in a running gear unit, in particular for a rail vehicle, the running gear unit comprising a wheel unit, a first torsional vibration reduction mass, and a second torsional vibration reduction mass, the wheel unit comprising a wheel unit shaft and at least one wheel configured to run on a track, the wheel unit shaft defining an axis of rotation, and the axis of rotation defining an axial direction and a radial direction of the wheel unit and a torsional direction about the axis of rotation. The method comprises coupling the wheel to the wheel unit shaft in a torsionally rigid manner about the axis of rotation. The method further comprises coupling the first torsional vibration reduction mass and the second torsional vibration reduction mass to the wheel unit in a torsionally compliant manner about the axis of rotation, such that each can oscillate about the axis of rotation in counter-phase with respect to a component of the wheel unit, in particular, with respect to the wheel, to reduce torsional vibration of the wheel unit, the coupling of the first torsional vibration reduction mass defining a first reduction resonant frequency of the counter-phase oscillation of the first torsional vibration reduction mass. The coupling of the second torsional vibration reduction mass defines a second reduction resonant frequency of the counter-phase oscillation of the second torsional vibration reduction mass, which is of the same order as the first reduction resonant frequency and has an intentional offset from the first reduction resonant frequency, the intentional offset, in particular, exceeding an offset caused by maximum manufacturing tolerances defined for the running gear unit.

With this method, the variants and advantages of the invention as may have been outlined above in the context of the running gear unit according to the invention may be realized to the same extent, such that reference is made in so far to the explanations given above.

Further preferred embodiments of the invention become apparent from the dependent claims or the following description of preferred embodiments which refers to the attached drawings.

## BRIEF DESCRIPTION OF THE DRAWINGS

Figure 1    is a schematic side view of a rail vehicle with a preferred embodiment of a running gear unit according to the invention;

Figure 2    is a schematic sectional view of the running gear unit of the vehicle from Figure 1;

Figure 3 is a first schematic sectional view of a part of the running gear unit from Figure 2 (detail III from Figure 2);

Figure 4 is a second schematic sectional view of a part of the running gear unit from Figure 2;

Figure 5 is a schematic sectional view of a part of the running gear unit from Figure 2 (along line V-V of Figure 3 or 4);

Figure 6 is a schematic sectional view of a part of the running gear unit from Figure 5 (along line VI-VI of Figure 5);

Figure 7 is a diagram illustrating the torsional vibration behavior of a reference running gear unit for the running gear unit from Figure 2;

Figure 8 is a diagram illustrating the torsional vibration behavior of the running gear unit from Figure 2;

Figure 9 is a schematic sectional view of a part of a further preferred embodiment of the running gear unit according to the invention in a view similar to the one of Figure 5;

Figure 10 is a schematic perspective view of a part of the running gear unit from Figure 9;

Figure 11 is a schematic perspective view of a further part of the running gear unit from Figure 9;

Figure 12 is a schematic sectional view of a part of a further preferred embodiment of the running gear unit according to the invention in a view similar to the one of Figure 5;

Figure 13 is a schematic perspective view of a part of the running gear unit from Figure 12;

Figure 14 is a schematic perspective view of a further part of the running gear unit from Figure 12;

DETAILED DESCRIPTION OF THE INVENTION

First Embodiment

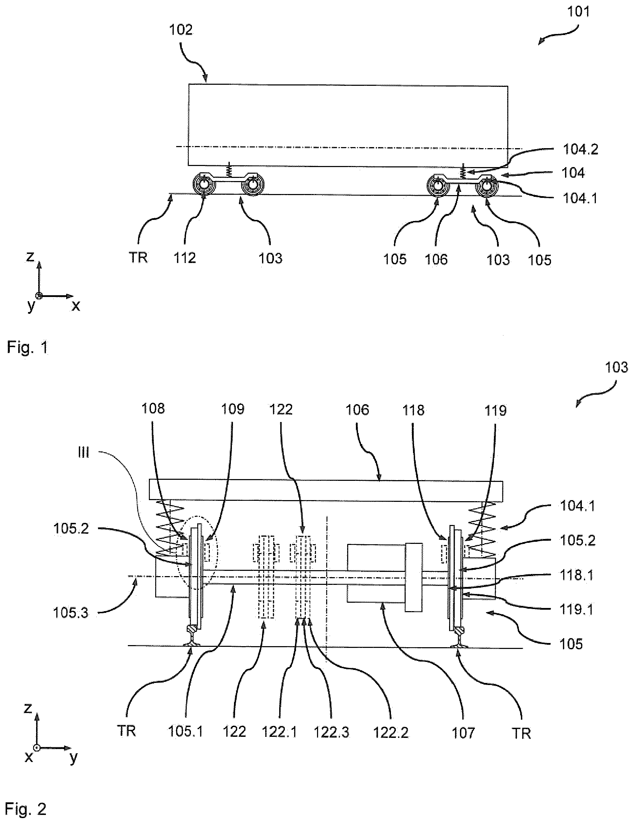

In the following, with reference to Figures 1 to 8, a preferred embodiment of a running gear unit according to the invention will be described by means of a running gear according to the invention for a rail vehicle 101. The vehicle 101 may be a vehicle of a train set and, hence, may be coupled to one or more further vehicles (not shown) of the train set. Moreover, all or some of the vehicles of the train set may implement the present invention as described herein.

Figure 1 shows a schematic side view of the vehicle 101. The vehicle 101 comprises a wagon body 102, which in the area of its first end is supported on a running gear in the form of a first bogie 103 by means of a first spring device 104. In the area of its second end, the wagon body 102 is supported by means of a second spring device 104 on a second running gear in the form of a second bogie 103. The bogies 103 are of identical design. Similar applies to the spring devices 104. It is self-evident, however, that the present invention can also be used with other configurations in which other running gear designs are employed.

For ease of understanding of the explanations that follow, a coordinate system x, y, z (determined by the wheel contact plane of the bogies 104) is indicated in the figures, in which the x coordinate denotes the longitudinal direction of the rail vehicle 101, the y coordinate denotes the transverse direction of the rail vehicle 101 and the z coordinate denotes the height direction of the rail vehicle 101.

The bogie 104 comprises two running gear units according to the invention in the form of wheel sets 105, each of which via the primary suspension 104.1 of the spring device 104 supports a bogie frame 106. The wagon body 102 is supported via a secondary suspension 104.2 on the bogie frame 106. The primary suspension 104.1 and the secondary suspension 104.2 are shown in simplified form in Figure 1 as helical springs. It is self-evident, however, that the primary suspension 104.1 or the secondary suspension 104.2 can be any suitable spring device. In particular, the secondary suspension 104.2 preferably is a sufficiently well-known pneumatic suspension or similar.

In the present example, the bogie 104 is configured as a traction unit with its wheel sets 105 connected to a conventional drive unit 107 driving the wheel set 105. The drive unit 107 comprises a motor connected to a gearbox, which transmits the motor torque MT in a conventional manner to the wheel set shaft 105.1 of the wheel set 105. The wheels 105.2 of the wheel set 105 are mounted to the wheel set shaft 105.1 in a torsionally rigid manner by a press fit connection, such that the traction torque MT is transmitted to the rails TR of the track T resulting in a traction force FT at the wheel to rail contact point.

The wheel set shaft 105.1 defines an axis of rotation 105.3, which defines an axial direction AD and a radial direction RD of the wheel set 105 as well as a torsional direction TD or circumferential direction CD, respectively, about the axis of rotation 105.3.

It will be appreciated that the above not only applies to a situation where the vehicle is (positively) accelerated by the drive unit 107. It also applies under moment transmission conditions where the vehicle is decelerated (or negatively accelerated, respectively) by the drive unit 107, e.g. during so called electric braking of the vehicle.

It will be further appreciated, however, that with other embodiments of the invention, at least one of the wheel sets 105 may also be a non-driven wheel set. Here, such torsional vibration may develop, in particular, when braking occurs via shaft mounted brake discs.

Transfer of the traction forces FT from the wheels 105.2 to the rails TR requires a relative speed between the wheel 105.2 and the rails TR. In other words, the tangential speed U of the wheel 105.2 at the wheel to rail contact point must be greater than the translational speed V of the wheel 105.2. This relative speed between the wheel 105.2 and the rail TR is called slip speed (or, in some cases hereinafter, simply slip) S = U - V.

The effective traction force FT at the wheel to rail contact point calculates as the product of the contact force FC and the adhesion factor AF at the wheel to rail contact point, i.e. as:

$$FT = AF \cdot FC . \qquad (1)$$

The characteristic relation between the slip S and the adhesion factor AF, hence, the effective traction force FT, the so called adhesion characteristic AC, is generally known.

Typically, in a first operating area OA1 at very low slip speeds S, has a steep gradient in the adhesion characteristic AC, flattening out in a second operating area OA2 at a certain level depending on the adhesion level available between the wheel 105.2 and the rail TR. The adhesion level is defined by the contact conditions between the wheel 105.2 and the rail TR, such as dry contact conditions, wet contact conditions, water or leaves on the track T, etc. Generally, in a third operating area OA3 at higher slip levels, the adhesion drops down with a negative gradient following a logarithmic shape.

The shaft 105.1 connecting the wheels 105.2 basically forms a torsional spring between the two wheels 105.2 with a very low damping ratio. There are a number of different coupling arrangements possible, some where the coupling between the motor and the shaft 105.1 is of a hollow shaft type connected to one of the wheels, or so called axle hug or semi suspended drives, where the gearbox is located just beside one wheel 105.2. In special cases, the coupling is allocated just in the middle of the shaft 105.1 through a hollow shaft design. Coupling and gearbox act as a spring and damping system as well, so that the drivetrain is basically a three mass/spring system with all its dynamic characteristics.

The mechanical system of the wheel set 105 has a very low damping ratio and is therefore easily excited and brought into torsional oscillation, a so called torsional vibration TV. The wheels 105.2 are then oscillating against each other about the axis of rotation 105.3 of the wheel set 105 with a frequency between around 40 Hz to 120 Hz, depending on the rigidities, the dimensions and the masses of the components of the wheel set 105, in particular, of the wheels 105.2 and the shaft 105.1. These rigidities, dimensions and masses define one or more torsional vibration resonant frequencies TVRF of the wheel set 105.

Apparently, during operation of the rail vehicle 101, the dimensions and masses of the components of the wheel set 105 undergo wear related changes. In particular, the rail contact surfaces of the wheels 105.2 wear down to a considerable amount, thereby reducing both the mass and the diameter of the wheel. This causes a modification of the torsional vibration resonant frequencies TVRF of the wheel set 105 over its lifetime as will be explained in greater detail below.

As the wheels 105.2 are exposed to the different adhesion characteristics, this oscillation behaves different, depending on the operating point OP on the respective adhesion characteristic. In the operating area OA1, the gradient is positive, i.e. the slip energy acts as a damper and no torsional oscillation of the wheels 105.2 is possible.

In the operating area OA2, the gradient is substantially zero. At this point, a torsional oscillation is not yet starting, but such an operating point with maximum adhesion is difficult to maintain with the traction control system. The shaft 105.1 tends to slip out into the operating area OA3 with its negative gradient. Such a negative gradient of the adhesion characteristic acts as damper with a negative characteristic, which is equal to an active excitation of any oscillation of the mechanical system.

While traversing the operating area OA2 on the adhesion characteristic, the adhesion force changes, and, with an asymmetric mechanical system as shown in Figure 2, an initiation of the torsional oscillation TV is given by the nature of the system. The torsional oscillation or torsional vibration TV of the wheels 105.2 then starts and propagates.

Typically, there is an exponential growth (over time t) of the amplitude MTVA of the oscillating torque MTV acting within the shaft 105.1 as a result of the torsional vibration TV. The exponential growth of the amplitude MTVA depends on the inertia of the wheels 105.2 and the motor 107.1 and the stiffness of the shaft 105.1, as well as of the type of arrangement, in particular, at which position on the shaft 105.1 the torque of the motor is introduced.

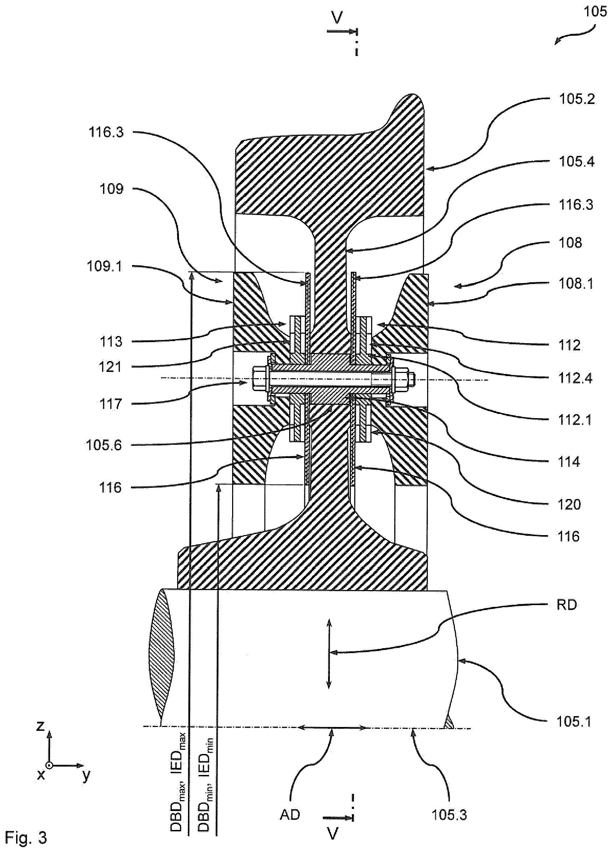

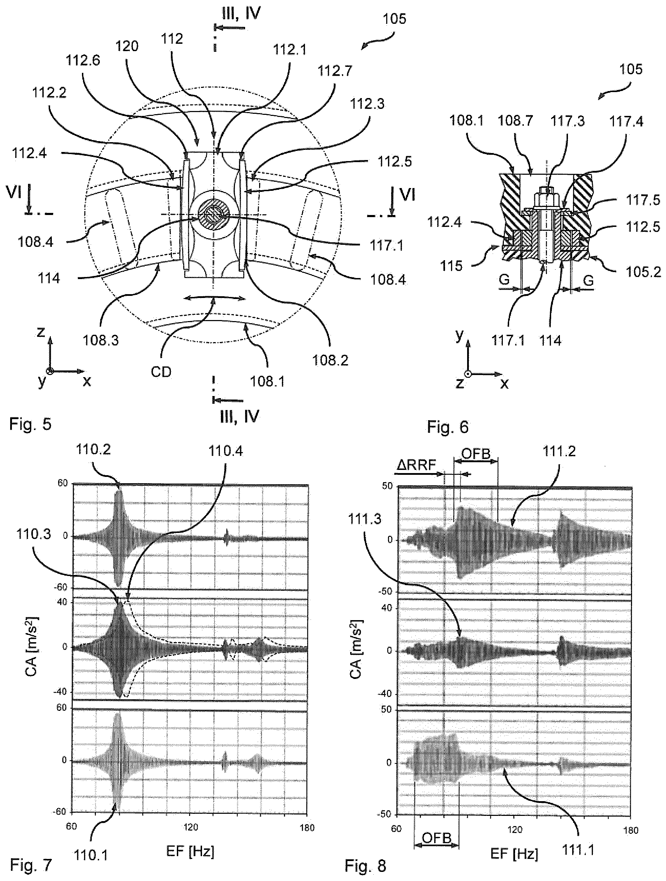

As can be seen, in particular, from Figure 3, to passively counteract this torsional vibration TV, a first torsional vibration reduction mass unit 108, and a second torsional vibration reduction mass unit 109 are provided, the operation of which will be explained in greater detail below, in particular with reference to Figure 7 and 8.

The first torsional vibration reduction mass unit 108 comprises a first torsional vibration reduction mass in the form of a first brake disc 108.1 coupled to the wheel set 105, more precisely to the wheel 105.2, in a torsionally compliant manner about the axis of rotation 105.3. Similarly, the second torsional vibration reduction mass unit 109 comprises a second torsional vibration reduction mass in the form of a second brake disc 109.1 also coupled to the wheel set 105, more precisely to the wheel 105.2 in a torsionally compliant manner about the axis of rotation.

To show the effect of the torsional vibration reduction mass units 108 and 109, Figure 7 first shows the torsional vibration response to torsional vibration excitation VE at a conventional reference wheel set without such torsional vibration reduction mass units.

The reference wheel set corresponds to the wheel set 105 (in a new, unworn state), but has the brake discs 108.1 and 109.1 coupled in a torsionally rigid manner to the wheel 105.2. In Figure 7, diagram 110.1 shows the torsional vibration response at the first brake disc 108.1, diagram 110.2 shows the torsional vibration response at the second brake disc 109.1, and diagram 110.3 shows the torsional vibration response at the wheel 105.2. More precisely, the respective torsional vibration response is represented by the respective maximum circumferential acceleration CA detected at the respective component and over the excitation frequency EF.

As can be seen from Figure 7, the unworn reference wheel set exhibits pronounced torsional vibration resonance TVR at a torsional vibration resonance frequency of about $TVRF_{unworn}$ = 84 Hz. Due to the rigid coupling, similar applies to the first and second brake disc 108.1 and 109.1. Furthermore, as is indicated in Figure 7 by the dashed contour 110.4, over the lifetime of the wheel set, due to the wear related effects as outlined above, the torsional vibration response undergoes noticeable changes shifting the response towards higher frequencies.

With the wheel set 105 of the present embodiment (and contrary to the reference wheel set), the first brake disc 108.1 and the second brake disc 109.1 are configured and arranged to oscillate mutually independently about the axis of rotation 105.3 in counter-phase with respect to the wheel 105.2 to reduce overall torsional vibration TV of the wheel set 105.

Figure 8 shows the torsional vibration response at wheel set 105 (in a new, unworn state) to the torsional vibration excitation VE, i.e. an excitation which is identical to the excitation VE used for the reference wheel set (as described in the context of Figure 7). In Figure 8, diagram 111.1 shows the torsional vibration response at the first brake disc 108.1, diagram 111.2 shows the torsional vibration response at the second brake disc 109.1, and diagram 111.3 shows the torsional vibration response at the wheel 105.2. Again, the respective torsional vibration response is represented by the respective maximum circumferential acceleration CA detected at the respective component over the excitation frequency EF.

As can be clearly seen from diagram 111.1 of Figure 8, the first torsional vibration reduction mass unit 108 with the first brake disc 108.1 exhibits a (first order) first reduction resonant frequency RRF1 of its counter-phase oscillation, which is located in the area of RRF1 = 84 Hz, i.e. a first reduction resonant frequency RRF1 which is in the area of the torsional vibration resonance frequency $TVRF_{unworn}$ of the unworn wheelset 105 (see diagram 110.3 of Figure 7).

Hence, in other words, in the present example, the first torsional vibration reduction mass unit 108 is tuned to an unworn state of the wheel set 105 (i.e. to a first torsional resonant frequency TVRF1 = $TVRF_{unworn}$ = 84 Hz of the wheel set 105), such that efficient passive torsional vibration reduction in this new or unworn state is achieved at the wheel set 105 as can be seen from diagram 111.3. More precisely, diagram 111.3 clearly shows that the torsional vibration at the wheel set 105 is considerably reduced to a maximum of only about 42% of the torsional vibration of the reference wheel set at the same excitation.

As can be further seen from diagram 111.2 of Figure 8, the second torsional vibration reduction mass unit 109 exhibits a second reduction resonant frequency RRF2 of the counter-phase oscillation of the second brake disc 109.1, which is of the same order (i.e. also of first order) as the first reduction resonant frequency RRF1, but has an intentional offset ΔRRF from the first reduction resonant frequency RRF1. More precisely, the second reduction resonant frequency RRF2 is located in the area of RRF2 = 92 Hz (i.e. ΔRRF = 8 Hz).

In the present example, the second torsional vibration reduction mass unit 109 is tuned to a (later) fully worn state of the wheel set 105, where exchange of the wheels 105.2 is required by the operator of the vehicle 101. In this fully worn state, the wheel set 105 exhibits pronounced torsional vibration at an increased second torsional resonant frequency TVRF2 = $TVRF_{worn}$ = 92 Hz, such that a wheel unit lifetime resonant frequency gap of about LRFG = 8 Hz results between $TVRF_{unworn}$ and $TVRF_{worn}$. Hence, with the present embodiment, efficient passive torsional vibration reduction is also obtained at this later point in time of the lifecycle of the wheel set 105.

It will be appreciated that, in the present embodiment, the intentional offset ΔRRF clearly and pronouncedly exceeds an offset caused by maximum manufacturing tolerances defined for the running gear 103, in particular defined for the wheel set 105. Such an offset caused by maximum manufacturing tolerances typically would be well below 1 Hz.

Hence, with the present embodiment, efficient torsional vibration reduction over an extended period of time or usage, respectively, of the vehicle 101 is achieved by this intentional and noticeable offset ΔRRF between the first reduction resonant frequency RRF1 and the second reduction resonant frequency RRF2. Hence, in a very simple manner, the passive vibration reduction system of the present embodiment is efficient in more than one state in the lifecycle of the wheel set 105.

In the present example, the first reduction resonant frequency RRF1 differs from the first wheel unit resonant frequency TVRF1 by less than 5%. Similar applies to the second reduction resonant frequency RRF2, which differs from the second wheel unit resonant frequency TVRF2 also by less than 5%. It will be appreciated however, that with certain other preferred embodiments of the invention, the first reduction resonant frequency RRF1 may differ from the first wheel unit resonant frequency TVRF1 by at most 50%, preferably at most 25%, more preferably by at most 5% to 15%, of the wheel unit lifetime resonant frequency gap LRFG, in order to provide proper and elevated torsional vibration reduction in the initial part of the lifecycle of the wheel unit 105 is. In addition or as an alternative, be provided that the second reduction resonant frequency RRF2 differs from the second wheel unit resonant frequency TVRF2 by at most 50%, preferably at most 25%, more preferably by at most 5% to 15%, of the wheel unit lifetime resonant frequency gap LRFG, in order to provide proper and elevated torsional vibration reduction in the terminal part of the lifecycle of the wheel set 105.

Furthermore, in the present example, the second reduction resonant frequency RRF2 differs from the first reduction resonant frequency RRF1 by about 100% of the wheel unit lifetime resonant frequency gap LRFG. With other embodiments of the invention, however, it may be provided that the second reduction resonant frequency RRF1 differs from the first reduction resonant frequency RRF2 by 20% to 100%, preferably 30% to 80%, more preferably by 40% to 70%, of the wheel unit lifetime resonant frequency gap LRFG, in order to provide proper and elevated torsional vibration reduction is achieved over a comparatively large torsional vibration frequency band.

It will be appreciated in this context that, in the present example with the electric drive system 107, electric (or regenerative) braking is used as the main type or preferred type of service brake, such that the brake discs 108.1 and 109.1 are fairly rarely used during operation of the vehicle 101, namely typically only in emergency braking situations. Hence, such the brake discs 108.1 and 109.1 are well-suited for providing torsional vibration reduction under most operating conditions of the vehicle 101, in particular under all electric braking situations where no use is made of the brake discs 108.1 and 109.1.

Furthermore, in the present example, the second reduction resonant frequency RRF2 differs from the first reduction resonant frequency RRF1 by about 9.5% of the first reduction resonant frequency RRF1. With certain embodiments of the invention, the second reduction resonant frequency RRF2 may also differ from the first reduction resonant frequency by at least 2%, preferably by 5% to 25%, more preferably by 10% to 20%, of the first reduction resonant frequency RRF1.

In the present example, the torsionally compliant connection allowing the counter-phase oscillation between the respective brake disc 108.1 and 109.1 and the wheel 105.2 each is achieved via a plurality of eight torsional linking arrangements 112 and 113, respectively, evenly distributed along the circumferential direction CD of the respective brake disc 108.1 and 109.1 (see, in particular, Figure 1). It will be appreciated, however, that with other embodiments of the invention, any other desired number of such torsional linking arrangements 112, 113 may be selected, in particular, as a function of the torsional compliance to be achieved.

In the present example, the first torsional linking arrangements 112 (for the first brake disc 108.1) and the second torsional linking arrangements 113 (for the second brake disc 109.1) are largely identical, such that their functionality will be described mainly by way of example of one of the first linking arrangements 112 and only the differences will be referred to in greater detail.

The respective torsional linking arrangement 112 is compliant in the circumferential direction CD in the present example, is a modified conventional sliding block arrangement. Such conventional sliding block arrangements are typically provided to allow mutual (braking heat induced) thermal expansion between the brake disc and the wheel during operation.

As can be seen particularly well from Figure 5, the torsional linking arrangement 112, in the present example, comprises a first support element in the form of a sliding block element 112.1, a second support element in the form of a first shoulder element 112.2, a third support element in the form of a second shoulder element 112.3, a first spring element 112.4 and a second spring element 112.5.

The sliding block element 112.1 is connected to the wheel 105.2, more precisely to its web section 105.4, by a bolt element 114, which is inserted (substantially without play) into a bore 105.6 within the web section 105.4, to provide a connection that is substantially rigid in the circumferential direction CD.

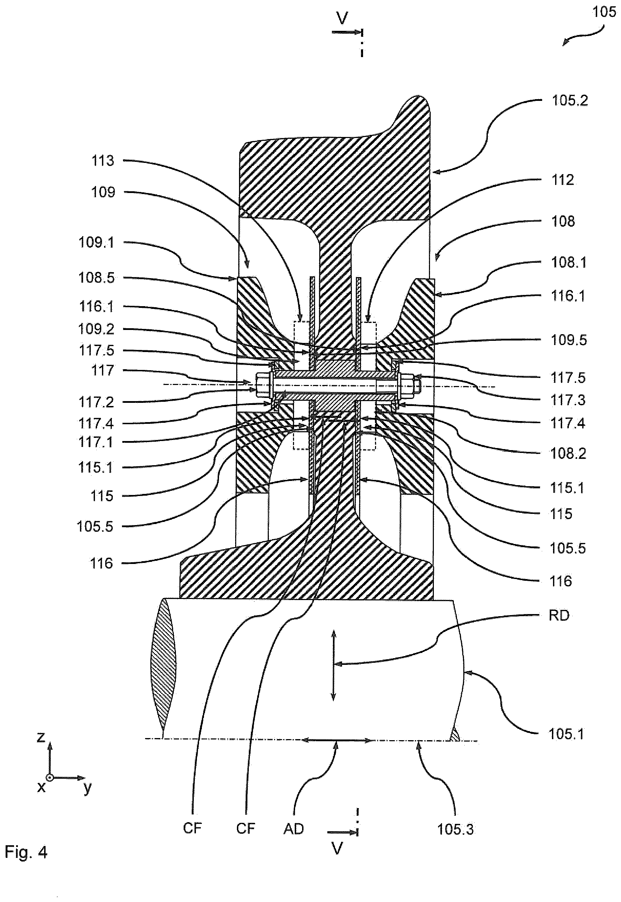

As can be seen best from Figure 4 (showing the part of the wheel set 105 of Figure 3 with the sliding blocks only indicated by the dashed contours 112 and 113), the first shoulder element 112.2 and the second shoulder element 112.3 are formed by a radial recess 108.2 (forming two substantially parallel shoulder surfaces) within an axial protrusion 108.3 of the first brake disc 108.1, which receives the sliding block element 112.1 together with the spring elements 112.4 and 112.5, such that a substantially rigid support in both directions of rotation along the circumferential direction CD is formed within the first brake disc 108.1.

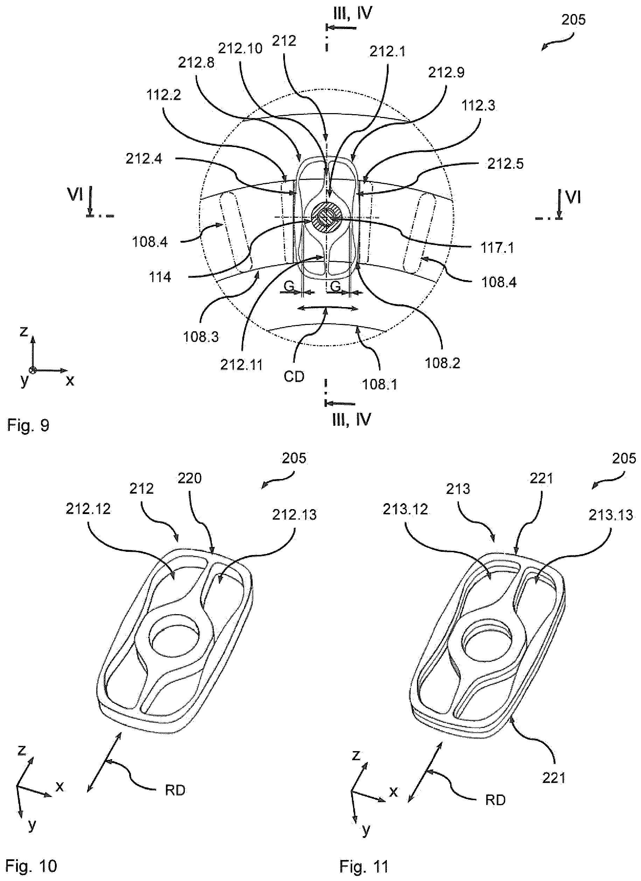

In the present example, the axial protrusion 108.3 is a generally ring shaped protrusion of the brake disc 108.1, which is only interrupted by the (eight) recesses 108.2 along its circumference. It will be appreciated, however, that with other embodiments of the invention, a configuration with a plurality of rib-like protrusions may be provided (as it is indicated in Figure 9 by the double-dot-dashed contours 108.4). In this case, the recess 108.2 forming the shoulder surfaces of the shoulder elements 112.2 and 112.3 is then located between two of these protrusions 108.4 (each forming one of the shoulder elements 112.2 and 112.3).

The first spring element 112.4 is removably inserted into a receptacle 112.6 within the sliding block element 112.1, such that each of its ends rests against the sliding block element 112.1 but doesn't contact the first shoulder element 112.2. Contrary to that, the middle section of the first spring element 112.4 (under a certain defined pre-stress) abuts against the associated first shoulder element 112.2. A small gap G is formed between the middle section of the first spring element 112.4 and the sliding block element 112.1, such that they don't contact in this area. Hence, the first spring element 112.4 is arranged and acts kinematically in series between the sliding block element 112.1 and the first shoulder element 112.2 to provide the compliance of the linking arrangement 112 in a first torsional direction along the circumferential direction CD.

Similarly, the second spring element 112.5 is removably inserted into a receptacle 112.7 within the sliding block element 112.1, such that each of its ends rests against the sliding block element 112.1 but doesn't contact the second shoulder element 112.3. Again, the middle section of the second spring element 112.5 (under a certain defined pre-stress) abuts against the associated second shoulder element 112.3. Again, a small gap G is formed between the middle section of the second spring element 112.5 and the sliding block element 112.1, such that they don't contact in this area. Hence, also the second spring element 112.5 is arranged and acts kinematically in series between the sliding block element 112.1 and the second shoulder element 112.3 to provide the compliance of the linking arrangement 112 in the other, second torsional direction along the circumferential direction CD.

By this means, a very simple and reliable torsionally compliant connection is achieved, while the spring elements 112.4 and 112.5 are readily available to be tuned to the desired reduction resonant frequency RRF1 as it has been described above.

The respective spring element 112.4, 112.5 may basically have any desired and suitable configuration. In the present embodiment, the spring elements 112.4, 112.5 are formed by a leaf spring element having a slightly curved contact surface with the shoulder surface of the associated shoulder element 112.2, 112.3 (to allow substantially unhindered relative sliding motion along the radial direction RD during thermal expansion of the brake disk 108.1 as it is indicated by the dashed contours in Figure 5). It will be appreciated however, that with other embodiments of the invention any other suitable type and/or geometry of the spring element may be chosen as long as the required counter-phase oscillation is achieved.

Furthermore, in the present example, the spring elements 112.4 and 112.5 are configured such that proper support of the first brake disc 108.1 to (maximum) braking moments is provided via the torsional linking arrangements 112 exclusively by the elastic counterforce of the spring elements 112.4 and 112.5. Hence, in the present example, no additional hard stops or the like are necessary (between the brake disc 108.1 and the wheel 105.2) for transmitting such braking moments.

Hence, in the present example, even under such maximum braking torques, the small gap G doesn't close (but maintains a certain non-zero width). More precisely, to achieve this, the rigidity of the respective spring element 112.4, 112.5 is configured such that the deflection (in the circumferential direction CD) of the middle section of the respective spring element 112.4, 112.5 from the neutral state (as shown, in particular, in Figure 5 and 6) under the maximum braking torque $MB_{max}$ (to be expected during normal operation) is about 0.1 mm, while the gap G in the neutral state, is slightly larger than 0.1 mm.

As mentioned above, first torsional linking arrangements 112 and the second torsional linking arrangements 113 are largely identical. More precisely, the torsional linking arrangement 113, in the present example, also comprises a first support element in the form of a sliding block element 113.1, a second support element in the form of a first shoulder element 113.2, a third support element in the form of a second shoulder element 113.3, a first spring element 113.4 and a second spring element 113.5. The only difference with respect to the first torsional linking arrangement 112 lies in the fact that the spring elements 113.4, 113.5 are tuned to the desired second reduction resonant frequency RRF2 as it has been described above.

It will be appreciated that, in the present example, the respective tuning to the first reduction resonant frequency RRF1 and the second reduction resonant frequency RRF2 is done exclusively via the rigidity of the spring elements 112.4, 112.5 and the spring elements 113.4, 113.5 in the circumferential direction CD. With other embodiments of the invention, however, in addition or as an alternative, the tuning may be done via the mass and/or geometry of the brake discs 108.1, 109.1, respectively (i.e. via the moment of inertia of the counter-phase oscillating masses about the axis of rotation 105.3).

It will be appreciated that the present configuration is particularly suitable for replacement or retrofit solutions where conventional sliding blocks (allowing mutual radial thermal expansion between the brake disc and the wheel) are replaced by the linking units 120, 121 (formed by elements 112.1, 113.1 and associated springs 112.4, 112.5, 113.4, 113.5, respectively) such torsional linking arrangements 112, 113 in order to transform conventional braking discs 108.1, 109.1 into torsional vibration reduction masses. Such a configuration is particularly beneficial since it requires virtually no noticeable modification to the conventional structural design.

As becomes apparent from the diagrams 111.1 and 111.2 of Figure 8, in the present example, detuning of the frequency of the counter-phase oscillation of the respective brake disc 108.1 and 109.1 is provided in order to broaden the counter-phase oscillation frequency band OFB in which the respective torsional vibration reduction mass unit 108 and 109 provides noticeable and sufficient torsional vibration reduction (as can be seen from diagrams 111.1 and 111.2 of Figure 8).

It will be appreciated that the amount of torsional vibration reduction to be achieved within the counter-phase oscillation frequency band OFB may vary as a function of the amplitude of the torsional vibration on the wheel set 105. Preferably, the counter-phase oscillation, in the respective counter-phase oscillation frequency band OFB, provides reduction of the torsional vibration of the wheel set 105 by at least 40%, preferably at least 50%, more preferably at least 65%, compared to a reference state, where the brake discs 108.1, 109.1 are missing or torsionally rigidly coupled to the wheel 105.2. In these cases a particularly favorable reduction of torsional vibration may be achieved. Furthermore, in the present example, the width of the counter-phase oscillation frequency band OFB is more than 30% of the lifetime resonant frequency gap LRFG..

To achieve appropriate broadband counter-phase oscillation, a corresponding damping of the counter-phase oscillation of the respective brake disc 108.1 and 108.9 is provided by coupling the latter to the web section 105.4 of the wheel 105.2 via a damping link 115 providing damping of the counter-phase oscillation.

In the present embodiment, the damping link 115 includes a frictional contact between the respective brake disc 108.1, 109.1 and the wheel 105.2, more precisely, the web section 105.4. In the present embodiment, the frictional contact takes place via an intermediate element in the form of a generally ring shaped sheet element 116 located axially between the respective brake disc 108.1, 109.1 and the wheel 105.2 and torsionally rigidly connected to the wheel 105.2 by the bolt elements 114 (extending substantially without play through mating recesses within the sheet element 116). The respective sheet element has a first contact surface 116.1 contacting the associated brake disc 108.1, 109.1 and a second contact surface 116.2 contacting the wheel 105.2.

It will be appreciated that, with other embodiments of the invention, the intermediate element 116 may also be mounted in a different way. In particular, it may be connected in a torsionally rigid manner to the respective brake disc 108.1, 109.1, while being movable in the circumferential direction with respect to the wheel 105.2. Furthermore, it may also be movable in the circumferential direction with respect to, both, the wheel 105.2 and the respective brake disc 108.1, 109.1.

Moreover, with certain variants, in particular, with variants where the axial protrusion of the brake disc 108.1 is formed by rib-shaped protrusions 108.4 (see Figure 5), the intermediate element may be formed by cap-like elements only covering the end section of the protrusion 108.3 or 108.4, respectively.

In the present example, each damping link 115 includes a contact surface pairing 115.1 which defines a frictional damping characteristic FDC of the damping link 115 and allows very simple and precise fine-tuning of the frictional damping characteristic FDC and, hence, of the bandwidth of the counter-phase oscillation frequency band OFB. The contact surface pairing 115.1 is formed by the first contact surface 116.1 and the associated brake disc contact surface 108.5, 109.5 formed at the axial end of each protrusion 108.3, 109.3 of the respective brake disc 108.1, 109.1.

It will be appreciated, however, that with other variants, the frictional contact providing the damping link functionality may also be formed directly between the brake disc 108.1, 109.1 and the wheel 105.2. It will be further appreciated that, with other variants, one or more further (eventually even substantially identically designed) intermediate elements may be provided between the brake disc 108.1, 109.1 and the wheel 105.2 (as it is indicated in Figure 3 by the dashed contour 116.3. Here, the contact conditions at the respective contact pairing may be selected such that damping frictional motion takes place at one defined surface pairing, for example, between two intermediate elements.

In the present example, the contact surface pairing 115.1 comprises a friction reducing contact surface, which is configured to reduce a coefficient of friction prevailing in the contact surface pairing 115.1 compared to a coefficient of friction prevailing in the contact pairing between the web section 105.4 and the intermediate sheet element 116. Furthermore, this friction reducing contact surface is configured to reduce the coefficient of friction prevailing in the contact surface pairing 115.1 compared to a reference situation where the respective brake disc contact surface 108.5, 109.5 would directly contact the web section 105.4 (i.e., a reference contact situation without such an intermediate element 116).

In the present example, the friction reducing contact surface is formed by the contact surface 116.1 of the intermediate element 116. More precisely, the friction reducing surface 116.1 comprises a friction reducing material in the form of a friction reducing coating comprising molybdenum, which in addition provides friction corrosion reduction. It will be appreciated that any desired and suitable friction reducing material may be used for such a coating or the intermediate sheet element 116. Preferably, in case of the intermediate sheet element 116, the friction reducing material comprises stainless steel.

It should be noted in this context that the friction reducing contact surface at the specific advantage that it allows sufficiently pronounced counter-phase oscillation while still providing appropriate damping and, hence, broadening of the counter-phase oscillation frequency band OFB. It is further to be noted that, with other embodiments of the invention, such a friction reducing contact surface may also be formed at either one of the brake discs, 108.1, 109.1 or the wheel 105.2.

It will be appreciated that, generally, adjustment of the counter-phase oscillation frequency band OFB may be done via the parameters of the frictional contact surfaces of the contact surface pairing 115.1 and/or the contact force CF or resulting contact pressure CP, respectively, acting at this contact surface pairing 115.1.

Hence, in the present embodiment, the contact force CF (only highly schematically indicated in Figure 4) present at the respective contact pairing 115.1 is adjustable via a an axial linking arrangement forming a contact force adjustment device 117 of the damping link 115 to provide the appropriate damping characteristic.

As can be seen from Figure 3 to 6, the contact force adjustment device 117 comprises a screw element 117.1, reaching through a central bore within the bolt element 114. A screw head 117.2 of the screw element 117.1 and a nut 117.3 engaging the threaded end of the screw element 117.1 each clamp an inner circumference of a disc spring 117.4 against the respective free end surface of the bolt element 114 (reaching through a bore 108.6, 109.6 within the respective brake disc 108.1, 109.1). The outer circumference of the respective disc spring 117.4 abuts against a spacer ring 117.5, which surrounds the respective free end of the bolt element 114 and sits on an axial shoulder formed by an axial recess 108.7 within the respective brake disc 108.1, 109.1.

By selecting the axial thickness of the respective spacer ring 117.5, the deformation and, hence, the elastic restoring force of the respective disc spring 117.4 may be finely adjusted. This restoring force of the respective disc spring 117.4, via the spacer ring 117.5, acts on the respective brake disc 108.1, 109.1 and, ultimately, defines the contact force CF at the contact pairing 115.1.

This configuration further has the advantage that, due to the clamping of the inner circumference of the respective disc spring 117.4 between the bolt element 114 and the screw head 117.2 or the nut 117.3, respectively, a well-defined and sufficiently large tightening moment may be applied to the screw connection (which is beneficial in terms of loosening safety of the screw connection). Nevertheless, despite this large tightening moment, a comparatively small but well defined contact force CF may be achieved at the contact pairing 115.1.

It will be appreciated that such a small, well defined contact force CF also is beneficial in terms of properly adjusting the counter-phase oscillation frequency band OFB, since it allows sufficiently large counter-phase oscillation over a broad frequency band.

In this context, it will be appreciated that, obviously, the bolt element 114 reaches through the bore 108.6, 109.6 with a sufficiently large play in the circumferential direction CD in order to allow the mutually independent counter-phase oscillations of the first brake disc 108.1 and the second brake disc 109.1 with respect to the wheel 105.2.

It will be further appreciated that, with other embodiments of the invention, separate bolt elements may be provided for mounting the first brake disc 108.1 and the second brake disc 109.1. These bolt elements could then, for example, be mutually shifted in the circumferential direction and interface with the wheel and only the associated brake disc. For example, a (correspondingly shorter) screw 117.1 could be screwed into a threaded axial bore within the web section 105.4 (instead of the nut 117.3), and the bolt element would then be reduced to a simple spacer sleeve abutting against the web section 105.4 (largely corresponding to the smaller diameter part of bolt element 114 protruding from the web section 105.4 in Figure 3 and 4).

In the present example, the respective torsional linking arrangement 112, 113, in the mounted state, is substantially symmetric with respect to the radial direction RD, in order to provide identical oscillation behavior in both directions along the circumferential direction, i.e. a defined reduction resonant frequency RRF1, RRF2. Furthermore, in the present example, the respective torsional linking arrangement 112, 113, in the mounted state, is substantially symmetric with respect to a plane perpendicular to the radial direction RD.

It will be appreciated that the intermediate sheet element 116 has a further great advantage insofar as it introduces an additional thermal resistance between the respective brake disc 108.1, 109.1 and the wheel 105.2. This noticeably reduces heat transfer from the respective brake disc 108.1, 109.1 into the wheel 105.2. For example, by this means, problems resulting from increased heat input into the wheel 105.2, such as, for example, damage of a protective coating etc. of the wheel 105.2, can be alleviated due to the reduced heat input.

As has been outlined above, this additional thermal resistance may already be generated due to the mere presence of the intermediate sheet element 116 at the respective interface between the brake disc 108.1, 109.1 and the wheel 105.2. Apparently, this additional thermal resistance can be further increased by selecting appropriate materials and/or an appropriate geometry and/or surface design at the respective interface.

In the present embodiment, the intermediate sheet element 116, in the radial direction, extends beyond the (generally ring shaped) wheel unit contact surface 105.5, over which it contacts the wheel 105.2. By this means, a further reduction of the heat transfer from the brake disc 108.1, 109.1 to the wheel 105.2 is achieved, since the intermediate sheet element 116 forms a simple heat shield element reducing the amount of heat introduced into the wheel 105.2 from the heated up brake disc 108.1, 109.1 (e.g. under heavy braking load), both via convective heat transfer and radiant heat transfer.

Hence, in the present example, the respective brake disc 108.1, 109.1 has a maximum reduction mass diameter $DBD_{max}$ in the radial direction RD and the intermediate sheet element 116 has a maximum (or outer) intermediate element diameter $IED_{max}$ in the radial direction RD, which is about 100% of the maximum (or outer) reduction mass diameter $DBD_{max}$. In addition, the respective brake disc 108.1, 109.1 has a minimum reduction mass diameter $DBD_{min}$ in the radial direction RD and the intermediate sheet element 116 has a minimum (or inner) intermediate element diameter $IED_{min}$ in the radial direction RD, which is about 100% of the minimum (or inner) reduction mass diameter $DBD_{min}$.

It will be appreciated that the intermediate sheet element 116 may be composed of any desired and suitable materials or material combinations. In the present example, the intermediate sheet element 116 is a simple to manufacture and robust, generally ring shaped sheet metal element.

It will be appreciated that, with certain embodiments of the invention, an identical configuration is chosen at the other wheel 105.2 of the wheel set 105. Hence, identical torsional vibration reduction mass units 108 and 109 may be provided at each of the two wheels 105.2.

It will be appreciated, however, that in the present example, at the other, second wheel 105.2 a third torsional vibration reduction mass unit 118 and a fourth torsional vibration reduction mass unit 119 are provided. These two torsional vibration reduction mass units 118 and 119 are largely identical to the torsional vibration reduction mass units 108 and 109, with the sole difference that the third torsional vibration reduction mass unit 118 has a (first order) third reduction resonant frequency RRF3 of its counter-phase oscillation, while the fourth torsional vibration reduction mass unit 119 has a (first order) fourth reduction resonant frequency RRF4 of its counter-phase oscillation.

In the present example, both, the third reduction resonant frequency RRF3 and the fourth reduction resonant frequency RRF4 have a further intentional offset from the first reduction resonant frequency RRF1 and from the second reduction resonant frequency RRF2. Here as well, the further intentional offset exceeds an offset caused by maximum manufacturing tolerances defined for the wheel set 105.

In the present example, the intentional offset between the first reduction resonant frequency and the second reduction resonant frequency ΔRRF is a first intentional offset ΔRRF1 and the further intentional offset is a second offset ΔRRF2, the second offset ΔRRF2 being about 30% of the first intentional offset ΔRRF1. In the present example, the third reduction resonant frequency RRF3 and the fourth reduction resonant frequency RRF4 are located between the first reduction resonant frequency RRF1 and the second reduction resonant frequency RRF2. Furthermore, the third reduction resonant frequency RRF3 and the fourth reduction resonant frequency RRF4 are also mutually offset by a third intentional offset ΔRRF3, which also is about 30% of the first intentional offset ΔRRF1. Hence, four different reduction resonant frequencies RRF1 to RRF4 are implemented, such that particularly even coverage of a broad frequency band of torsional vibration reduction is achieved at the wheel set 105.

It will be further appreciated that, with other embodiments of the invention, the first brake disc 108.1 and the second brake disc 109.1 may also be mutually rigidly coupled to each other, while being coupled in a torsionally compliant manner to a first wheel 105.2 of the wheel set 105, as it is known, for example, from EP 1 551 646 B1 (Bieker et al.), to form a combined first torsional vibration reduction mass. Similarly, the third brake disc 118.1 and the fourth brake disc 119.1 may also be mutually rigidly coupled to each other, while being coupled in a torsionally compliant manner to the other, second wheel 105.2 of the wheel set 105, to form a combined second torsional vibration reduction mass.

The combined first torsional vibration reduction mass (formed by the brake discs 108.1, 109.1) is then coupled in a torsionally compliant manner to the first wheel 105.2 to exhibit the counter-phase oscillation at the first reduction resonant frequency RRF1 (as described above). Similarly, the combined second torsional vibration reduction mass (formed by the brake discs 118.1, 119.1) is then coupled in a torsionally compliant manner to the second wheel 105.2 to exhibit the counter-phase oscillation at the second reduction resonant frequency RRF2 (as described above).

Second Embodiment

With reference to Figure 9 to 11 a further preferred embodiment of a running gear unit according to the invention in the form of a wheel set 205 will now be described in greater detail. The wheel set 205, in its basic design and functionality, largely corresponds to the wheel set 105, such that it will be mainly referred to the differences only. The wheel set 205 may replace the wheel set 105 in vehicle 101. Moreover, identical or like components are given the same reference numerals increased by 100. Unless deviating explanations are given in the following it is here explicitly referred to the explanations given above with respect to the features and functions of these components.

The only difference of the wheel set 205 with respect to the wheel set 105 lies in the design of the torsional linking arrangements 212 and 213, replacing the torsional linking arrangements 112 and 113 of the first embodiment.

As can be seen from Figures 9 to 11, the torsional linking arrangement 212, in the present example, the first support element 212.1, the first spring element 212.4 and the second spring element 212.5 are formed as a monolithic component in the form of a first elastic sliding block 220, which is connected to the wheel 105.2 by the bolt element 114 in the manner as it has been described above in the context of the first embodiment.

As can be seen from Figures 9 to 11, the first spring element 212.4 is formed as a generally C-shaped leaf spring section connected to the generally ring shaped first support element 212.1 to again form a first generally ring shaped element 212.8 integrating the first support element 212.1 and the first spring element 212.4.

Similarly, the second spring element 212.4 is formed as a generally C-shaped leaf spring section connected to the generally ring shaped first support element 212.1 to again form a second generally ring shaped element 212.9 integrating the first support element 212.1 and the second spring element 212.5.

In the present embodiment, the ring shaped elements 212.8 and 212.9 share common web elements 212.10 and 212.11, by which the first spring element 212.4 and the second spring element 212.4, respectively, are connected to the central first support element 212.1. It will be appreciated, however, that with other embodiments, each generally C-shaped leaf spring element 212.4, 212.5 may be connected separately to the first support element 212.1.

Again, the middle section of the first spring element 212.4 (under a certain defined pre-stress) abuts against the associated first shoulder element 112.2. Furthermore, again, a small gap G is formed between the middle section of the first spring element 212.4 and the first support element 212.1, such that they don't contact in this area. Hence, the first spring element 212.4 is arranged and acts kinematically in series between the first support element 212.1 and the first shoulder element 212.2 to provide the compliance of the linking arrangement 212 in a first torsional direction along the circumferential direction CD.

Similarly, the middle section of the second spring element 212.5 (under a certain defined pre-stress) abuts against the associated second shoulder element 112.3. Again, a small gap G is formed between the middle section of the second spring element 212.5 and the first support element 212.1, such that they don't contact in this area. Hence, also the second spring element 212.5 is arranged and acts kinematically in series between the first support element 212.1 and the second shoulder element 112.3 to provide the compliance of the linking arrangement 212 in the other, second torsional direction along the circumferential direction CD.

By this means, a very simple and reliable torsionally compliant connection is achieved, while the spring elements 212.4 and 212.5 are readily available to be tuned to the desired reduction resonant frequency RRF1 as it has been described above.

Again, in the present example, the spring elements 212.4 and 212.5 are configured such that proper support of the first brake disc 108.1 to (maximum) braking moments is provided via the torsional linking arrangements 212 exclusively by the elastic counterforce of the spring elements 212.4 and 212.5 (as it has been described above). Again, the rigidity of the respective spring element 212.4, 212.5 is configured such that the deflection (in the circumferential direction CD) of the middle section of the respective spring element 212.4, 212.5 from the neutral state (as shown, in particular, in Figure 9) under the maximum braking torque $MB_{max}$ (to be expected during normal operation) is about 0.1 mm, while the gap G in the neutral state, is larger than 0.1 mm.

As mentioned above, first torsional linking arrangements 212 and the second torsional linking arrangements 213 are largely identical. One difference lies in the fact that each of the second torsional linking arrangements 213 comprises stack of two such monolithic elements in the form of second elastic sliding blocks 221 (stacked along the axial direction in their mounted state).

In the present example, the elastic sliding blocks 220 and 221 are formed as simple sheet elements, which (in the mounted state) are substantially symmetric with respect to the radial direction RD. It will be appreciated that the respective sheet element 220, 221 may be of any desired and suitable material. In the present example, the respective sheet element 220, 221 is a sheet metal element, yielding a very simple to manufacture component.

Furthermore, in the present example, the respective sheet element 220, 221 is die-cut or laser-cut or water-jet-cut to form the respective spring elements as outlined above. It will be appreciated that, by the design of the respective cutout 212.12 and 212.13, defining the geometry of the respective spring element 212.4 and 212.5, the rigidity of the respective spring element 212.4, 212.5 may be adjusted in a very simple manner. In the present example, the respective cutout 212.12 and 212.13 is generally C-shaped or hourglass shaped with its central constriction defining the gap G. It will be appreciated, however, that with other embodiments of the invention, any other desired and suitable geometry of the cutout may be selected to provide the respective generally C-shaped spring element.

In the present example, the sheet elements 220, 221 have the same sectional contour but different thickness. More precisely, the second sheet elements 221 have half the thickness of the first sheet element 220, such that, in the stacked and mounted state, the total thickness of the two second sheet elements 221 is substantially identical to the thickness of the first sheet element 220.

The offset ΔRRF between the first reduction resonant frequency RRF1 (defined via the first sheet element 220) and the second reduction resonant frequency RRF2 (defined by the stacked second sheet elements 221) is obtained via different materials (having different rigidity properties) used for the first and second sheet elements 220 and 221. It will be appreciated, however, that with other embodiments of the invention, in addition or as an alternative, the offset ΔRRF may simply be achieved by a different number of sheet elements 221 used for the respective linking arrangement 212 and 213. Hence, for example, N sheet elements 221 may be used for the first linking arrangement 212, while M sheet elements 221, are used for the second linking arrangement 213 (with N ≠ M). Moreover, particularly precise fine-tuning of the respective reduction resonant frequency RRF1, RRF2 may be obtained by using sheet elements 213 of different thickness.

A further difference with respect to the first embodiment lies in the torsional vibration resonance behavior of the wheel set 205. In the present example, the first torsional vibration resonance frequency again is about $TVRF1 = TVRF_{unworn} = 84$ Hz, while the second torsional resonant frequency is about $TVRF2 = TVRF_{worn} = 118$ Hz, such that a wheel unit lifetime resonant frequency gap of about LRFG = 34 Hz results between $TVRF_{unworn}$ and $TVRF_{worn}$. The increased second torsional resonant frequency (compared to the first embodiment) may e.g. be due to larger wheel wear, which is admissible until the fully worn state is reached.

Here, the first torsional vibration reduction mass unit 208 with the first brake disc 108.1 exhibits a (first order) first reduction resonant frequency of about RRF1 = 92 Hz, i.e. a first reduction resonant frequency RRF1 which differs from the first torsional vibration resonance frequency TVRF1 by roughly 10% of the first torsional vibration resonance frequency TVRF1 (or by roughly 10% of the lifetime resonant frequency gap LRFG).

The second torsional vibration reduction mass unit 209 exhibits a second reduction resonant frequency is about RRF2 = 107 Hz (i.e. ∆RRF = 15 Hz), which differs from the second torsional vibration resonance frequency TVRF2 by roughly 10% of the first torsional vibration resonance frequency TVRF2 (or by roughly 32% of the lifetime resonant frequency gap LRFG). Hence, with the present embodiment, efficient passive torsional vibration reduction is also obtained at this later point in time of the lifecycle of the wheel set 205.

In the present example, the respective counter-phase oscillation frequency band OFB, provides reduction of the torsional vibration of the wheel set 205 by at least 40%, more precisely, between about 40% and 65%, compared to the reference state, where the brake discs 108.1, 109.1 are missing or torsionally rigidly coupled to the wheel 105.2. Furthermore, in the present example, the width of the respective counter-phase oscillation frequency band OFB is more than 40% of the lifetime resonant frequency gap LRFG.

It will be appreciated that, depending on the second torsional vibration resonance frequency TVRF2, this outlay of the torsional vibration resonance behavior may also be used for any other embodiment of the present invention, for example, the first embodiment as described above or the following third embodiment.

It will be appreciated that the present configuration is also particularly suitable for replacement or retrofit solutions where conventional sliding blocks (allowing mutual radial thermal expansion between the brake disc and the wheel) are replaced by the elastic sliding blocks 220 and 221 (forming linking units integrating the first support elements 212.1, 213.1 and the associated springs 212.4, 212.5, 213.4, 213.5, respectively) of such torsional linking arrangements 212, 213 in order to transform conventional braking discs 108.1, 109.1 into torsional vibration reduction masses. Such a configuration is particularly beneficial since it requires virtually no noticeable modification to the conventional structural design.

Third Embodiment

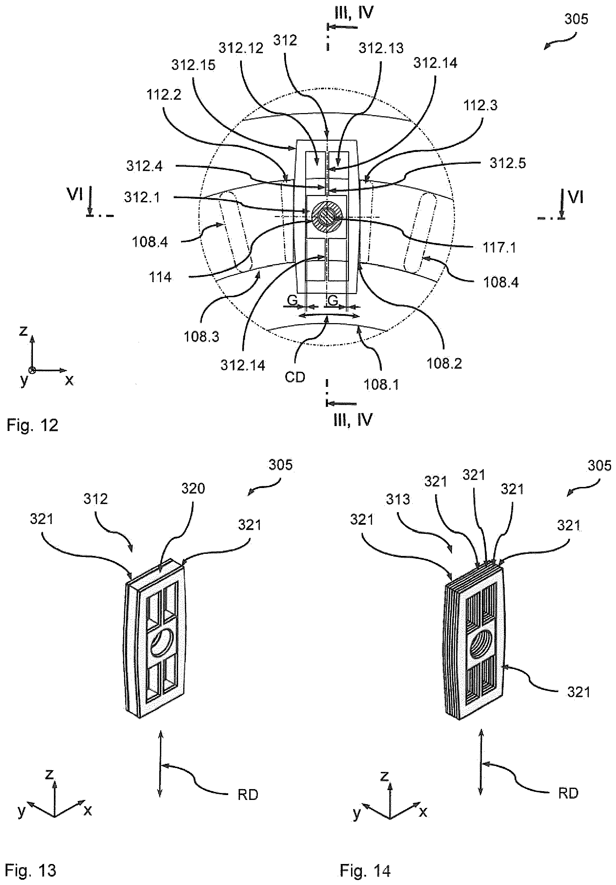

With reference to Figure 12 to 14 a further preferred embodiment of a running gear unit according to the invention in the form of a wheel set 305 will now be described in greater detail. The wheel set 305, in its basic design and functionality, largely corresponds to the wheel set 105, such that it will be mainly referred to the differences only. The wheel set 305 may replace the wheel set 105 in vehicle 101. Moreover, identical or like components are given the same reference numerals increased by 200. Unless deviating explanations are given in the following it is here explicitly referred to the explanations given above with respect to the features and functions of these components.

The only difference of the wheel set 305 with respect to the wheel set 105 lies in the design of the torsional linking arrangements 212 and 213, replacing the torsional linking arrangements 112 and 113 of the first embodiment.

As can be seen from Figures 12 to 14, the torsional linking arrangement 312, in the present example, the first support element 312.1, the first spring element 312.4 and the second spring element 312.5 are formed as a monolithic component in the form of a first elastic sliding block 320, which is connected to the wheel 105.2 by the bolt element 114 in the manner as it has been described above in the context of the first and second embodiment.

As can be seen from Figures 12 to 14, the first spring element 312.4 and the second spring element 312.5 are integrated within two generally straight, substantially collinear leaf spring sections 312.14 extending in the radial direction RD between the first support element 312.1 and an outer (generally ring shaped) frame element 312.15 forming the (curved) contact surfaces with the first and second shoulder elements 112.2, 112.3.

Here, on both sides (in the circumferential direction CD) of the first support element 312.1, a small gap G is formed between the frame element 312.15 and the first support element 312.1, such that they don't contact in this area. Hence, again, the leaf spring sections 312.14 (integrating the first spring element 312.4 and the second spring element 312.5 and forming one single central leaf spring element) are arranged and act kinematically in series between the first support element 312.1 and the first shoulder element 312.2 as well as the second shoulder element 112.3 to provide the compliance of the linking arrangement 312 in both torsional directions along the circumferential direction CD.

By this means, a very simple and reliable torsionally compliant connection is achieved, while the leaf spring sections 312.14 are readily available to be tuned to the desired reduction resonant frequency RRF1 as it has been described above.

Again, in the present example, the leaf spring sections 312.14 are configured such that proper support of the first brake disc 108.1 to (maximum) braking moments is provided via the torsional linking arrangements 312 exclusively by the elastic counterforce of the leaf spring sections 312.14 (as it has been described above). Again, the rigidity of the leaf spring sections 312.14 is configured such that the deflection (in the circumferential direction CD) of the frame element 312.15 from the neutral state (as shown, in particular, in Figure 12) under the maximum braking torque $MB_{max}$ (to be expected during normal operation) is about 0.1 mm, while the gap G in the neutral state, is larger than 0.1 mm.

As mentioned above, first torsional linking arrangements 312 and the second torsional linking arrangements 313 are largely identical. One difference lies in the fact that the first torsional linking arrangements 312 comprise a stack of one elastic sliding block 320 and two elastic sliding blocks 321, while each of the second torsional linking arrangements 313 comprises a stack of six such elastic sliding blocks 321 (all being stacked along the axial direction in their mounted state).

In the present example, the elastic sliding blocks 320 and 321, again, are formed as simple sheet elements, which (in the mounted state) are substantially symmetric with respect to the radial direction RD. It will be appreciated that the respective sheet element 320, 321 may be of any desired and suitable material. In the present example, the respective sheet element 320, 321 is a sheet metal element, yielding a very simple to manufacture component.

Furthermore, in the present example, the respective sheet element 320, 321 is die-cut or laser-cut or water-jet-cut to form the respective spring elements as outlined above. It will be appreciated that, by the design of the respective cutout 312.12 and 312.13, defining the geometry of the respective leaf spring section 312.14, the rigidity of the respective leaf spring section 312.14 may be adjusted in a very simple manner. In the present example, the respective cutout 312.12 and 312.13 is generally C-shaped with its central web defining the gap G. It will be appreciated, however, that with other embodiments of the invention, any other desired and suitable geometry of the cutout may be selected to provide the radially arranged leaf spring sections 312.14 and the respective gap G.

In the present example, the sheet elements 320, 321, again, have the same sectional contour but different thickness. More precisely, the second sheet elements 321 have a quarter the thickness of the first sheet element 320, such that, in the stacked and mounted state, the total thickness of the six second sheet elements 321 is substantially identical to the thickness of the first sheet element 320 and the two second sheet elements 321.

The offset ΔRRF between the first reduction resonant frequency RRF1 (defined via the first sheet element 320 and the two second sheet elements 321) and the second reduction resonant frequency RRF2 (defined by the stacked six second sheet elements 321) is obtained via different materials (having different rigidity properties) used for the first and second sheet elements 320 and 321. It will be appreciated, however, that with other embodiments of the invention, in addition or as an alternative, the offset ΔRRF may simply be achieved by a different number of sheet elements 321 used for the respective linking arrangement 312 and 213. Hence, for example, N sheet elements 321 may be used for the first linking arrangement 312, while M sheet elements 321, are used for the second linking arrangement 213 (with N ≠ M). Moreover, particularly precise fine-tuning of the respective reduction resonant frequency RRF1, RRF2 may be obtained by using sheet elements 213 of different thickness.

It will be appreciated that the present configuration as well is particularly suitable for replacement or retrofit solutions where conventional sliding blocks (allowing mutual radial thermal expansion between the brake disc and the wheel) are replaced by the elastic sliding blocks 320 and 321 (forming linking units integrating the first support elements 312.1, 313.1 and the associated springs 312.4, 312.5, 313.4, 313.5, respectively) of such torsional linking arrangements 312, 213 in order to transform conventional brake discs 108.1, 109.1 into torsional vibration reduction masses. Such a configuration is particularly beneficial since it requires virtually no noticeable modification to the conventional structural design.

The present invention, in the foregoing, has been described exclusively by means of examples where brake discs 108.1, 108.9 integrate the function of the respective torsional vibration reduction mass. It will be appreciated, however, that, with other embodiments of the invention, instead of the brake discs, components may be used, which exclusively have the function of providing torsional vibration reduction or integrate a function other than braking.

Furthermore, the present invention, in the foregoing, has been described exclusively by means of examples where the brake discs 108.1, 108.9 are mounted to the wheel 105.2 of the wheel set. It will be appreciated, however, that with other embodiments of the invention the respective torsional vibration reduction mass may be connected to any desired part of the wheel set.

With certain embodiments of the invention also requiring only very few modifications in the overall design of the wheel set, the first torsional vibration reduction mass and/or the second torsional vibration reduction mass may be coupled to the wheel set shaft 105.1, in particular, at a location remote from the respective wheel 105.2, as it is indicated, for example, by the dashed contours 122, where two brake discs 122.1 and 122.2 are mounted in a torsionally compliant manner to a web element 122.3 rigidly connected to the wheel set shaft 105.1. This variant is particularly beneficial, for example, for wheel unit designs where building space restrictions or other reasons do not allow mounting the torsional vibration reduction mass to the wheel 105.2.

Finally, the present invention, in the foregoing, has only been described by way of an example for rail vehicles. It will be appreciated, however, that the present invention may also be used for any other type of vehicle experiencing similar problems with torsional vibration at its wheel units..

## Claims

1.  A running gear unit, in particular for a rail vehicle, comprising

    - a wheel unit (105; 205; 305),
    - a first torsional vibration reduction mass unit (108), and
    - a second torsional vibration reduction mass unit (109);
    - said wheel unit (105; 205; 305) comprising a wheel unit shaft (105.1) and at least one wheel (105.2),
    - said wheel unit shaft (105.1) defining an axis of rotation (105.3), said axis of rotation (105.3) defining an axial direction and a radial direction of said wheel unit (105; 205; 305) as well as a torsional direction about said axis of rotation (105.3);
    - said wheel (105.2) being coupled to said wheel unit shaft (105.1) in a torsionally rigid manner about said axis of rotation (105.3) and being configured to run on a track;
    - said first torsional vibration reduction mass unit (108) comprising a first torsional vibration reduction mass (108.1) coupled to said wheel unit (105; 205; 305) in a torsionally compliant manner about said axis of rotation (105.3);
    - said second torsional vibration reduction mass unit (109) comprising a second torsional vibration reduction mass (109.1) coupled to said wheel unit (105; 205; 305) in a torsionally compliant manner about said axis of rotation (105.3);
    - said first torsional vibration reduction mass (108.1) and said second torsional vibration reduction mass (109.1) each being configured to oscillate about said axis of rotation (105.3) in counter-phase with respect to a component of said wheel unit (105; 205; 305), in particular, with respect to said wheel (105.2), to reduce torsional vibration of said wheel unit (105; 205; 305);
    - said wheel unit (105) having an unworn state in which said wheel unit (105) has a torsional vibration resonant frequency,
    - said first torsional vibration reduction mass unit (108) defining a first reduction resonant frequency of said counter-phase oscillation of said first torsional vibration reduction mass (108.1);

    **characterized in that**

    - said first reduction resonant frequency is located in the area of said torsional vibration resonant frequency of said wheel unit (105) in said unworn state, and
    - said second torsional vibration reduction mass unit (109) defines a second reduction resonant frequency of said counter-phase oscillation of said second torsional vibration reduction mass (109.1), which is of the same order as said first reduction resonant frequency and has an intentional offset from said first reduction resonant frequency, said intentional offset exceeding an offset caused by maximum manufacturing tolerances defined for said wheel unit (105).

2.  The running gear unit according to claim 1, wherein

    - said at least one wheel (105.2) has an unworn state and a fully worn state, where exchange of said at least one wheel (105.2) is required by an operator of said running gear unit, and
    - said torsional vibration of said wheel unit (105; 205; 305) has a first wheel unit resonant frequency in said unworn state and a second wheel unit resonant frequency in said fully worn state,
    - said first wheel unit resonant frequency and said second wheel unit resonant frequency defining a wheel unit lifetime resonant frequency gap,
    wherein
    - said first reduction resonant frequency is located in the area of said first wheel unit resonant frequency, in particular, substantially corresponds to said first wheel unit resonant frequency;
    and/or
    - said second reduction resonant frequency is located in the area of said second wheel unit resonant frequency, in particular, substantially corresponds to said second wheel unit resonant frequency.

3. The running gear unit according to claim 1 or 2, wherein

- said at least one wheel (105.2) has an unworn state and a fully worn state, where exchange of said at least one wheel (105.2) is required by an operator of said running gear unit, and
- said torsional vibration of said wheel unit (105; 205; 305) has a first wheel unit resonant frequency in said unworn state and a second wheel unit resonant frequency in said fully worn state,
- said first wheel unit resonant frequency and said second wheel unit resonant frequency defining a wheel unit lifetime resonant frequency gap,
wherein
- said first reduction resonant frequency differs from said first wheel unit resonant frequency by at most 50%, preferably at most 25%, more preferably by at most 5% to 15%, of said wheel unit lifetime resonant frequency gap; and/or
- said second reduction resonant frequency differs from said second wheel unit resonant frequency by at most 50%, preferably at most 25%, more preferably by at most 5% to 15%, of said wheel unit lifetime resonant frequency gap;
and/or
- said second reduction resonant frequency differs from said first reduction resonant frequency by 20% to 100%, preferably 30% to 80%, more preferably by 40% to 70%, of said wheel unit lifetime resonant frequency gap.

4. The running gear unit according to any one of claims 1 to 3, wherein,

- said second reduction resonant frequency differs from said first reduction resonant frequency by at least 2%, preferably by 5% to 25%, more preferably by 10% to 20%, of said first reduction resonant frequency, and/or
- said second reduction resonant frequency differs from said first reduction resonant frequency by at least 2 Hz, preferably by 5 Hz to 35 Hz, more preferably by 10 Hz to 20 Hz, and/or
- said first reduction resonant frequency and/or said second reduction resonant frequency has a value from 25 Hz to 150 Hz, preferably from 30 Hz to 120 Hz, more preferably from 55 Hz to 115 Hz.

5. The running gear unit according to any one of claims 1 to 4, wherein,

- said first torsional vibration reduction mass (108.1) and/or said second torsional vibration reduction mass (109.1) is coupled to said wheel unit (105; 205; 305) via a damping link (115) providing damping of said counter-phase oscillation;
wherein
- said damping link (115), in particular, includes a frictional contact between said torsional vibration reduction mass (108.1, 109.1) and said wheel unit (105; 205; 305)
and/or
- said damping link (115), in particular, includes a contact surface pairing (115.1) defining a frictional damping characteristic of said damping link (115).

6. The running gear unit according to claim 5, wherein,

- said damping link (115) is configured to adjust a counter-phase oscillation frequency band, in particular, to adjust a width of said counter-phase oscillation frequency band,
- said counter-phase oscillation, in said counter-phase oscillation frequency band, providing reduction of said torsional vibration of said wheel unit (105; 205; 305) by at least 40%, preferably at least 50%, more preferably at least 70%, compared to a reference state, where said torsional vibration reduction mass (108.1, 109.1) is missing or is torsionally rigidly coupled to said wheel unit (105; 205; 305);
wherein
- said at least one wheel (105.2) has an unworn state with a first wheel unit resonant frequency and a fully worn state requiring exchange of said at least one wheel (105.2) with a second wheel unit resonant frequency, said first wheel unit resonant frequency and said second wheel unit resonant frequency defining a wheel unit lifetime resonant frequency gap, and said width of said counter-phase oscillation frequency band is at least 10%, preferably at least 15%, more preferably 10% to 65%, of said wheel unit lifetime resonant frequency gap.

7. The running gear unit according to claim 5 or 6, wherein,

- said damping link (115) comprises at least one intermediate element (116) with at least one contact surface defining a frictional damping characteristic of said damping link (115);
- said intermediate element (116), in particular, having a first contact surface contacting said wheel unit (105; 205; 305) or said torsional vibration reduction mass in a first contact pairing and a second contact surface contacting a further component of said running gear unit in a second contact pairing, wherein, in particular,
- said first contact pairing and/or said second contact pairing are configured to define said frictional damping characteristic of said damping link (115);
and/or
- at least one friction reducing contact surface (116.1) participating in said second contact pairing is configured to reduce a coefficient of friction prevailing in said second contact pairing compared to a first coefficient of friction prevailing in said first contact pairing;
and/or
- at least one friction reducing contact surface participating in said first contact pairing and/or said second contact pairing comprises a friction reducing material, in particular a friction reducing coating, said friction reducing material, in particular, comprising molybdenum and/or stainless steel.

8. The running gear unit according to any one of claims 5 to 7, wherein,

- said damping link (115) comprises at least one contact surface pairing (115.1) and a contact force adjustment device (117);
- said contact force adjustment device (117) defining a contact force prevailing at said contact surface pairing (115.1);
- said at least one contact surface pairing (115.1) and said contact force defining a frictional damping characteristic of said damping link (115);
- said contact force adjustment device (117), in particular, comprising a spring element (117.4) defining said contact force.

9. The running gear unit according to any one of claims 5 to 8, wherein,

- said damping link (115) comprises at least one intermediate element (116);
- said at least one intermediate element (116) contacting said wheel unit (105; 205; 305) over a wheel unit contact surface (105.5) and defining a maximum diameter and/or a minimum diameter in said radial direction, wherein, in particular,
- said intermediate element (116), in said radial direction, extends beyond said wheel unit contact surface (105.5);
and/or
- said torsional vibration reduction mass associated to said intermediate element (116) has a maximum reduction mass diameter in said radial direction and said intermediate element (116) has a maximum intermediate element diameter in said radial direction, which is 50% to 120%, preferably 65% to 110%, more preferably 75% to 90%, of said maximum reduction mass diameter;
and/or
- said torsional vibration reduction mass associated to said intermediate element (116) has a minimum reduction mass diameter in said radial direction and said intermediate element (116) has a minimum intermediate element diameter in said radial direction, which is 50% to 120%, preferably 65% to 110%, more preferably 75% to 90%, of said minimum reduction mass diameter.

10. The running gear unit according to claim 9, wherein,

- said intermediate element (116) is a substantially ring-shaped element; and/or
- said intermediate element (116) is configured as a heat shield element shielding said wheel unit (105; 205; 305) from heat, in particular radiated heat, emitted from said associated torsional vibration reduction mass (108.1, 109.1);
and/or
- said intermediate element (116) comprises at least one sheet element, in particular, a sheet metal element.

11. The running gear unit according to any one of claims 1 to 10, wherein

- said first torsional vibration reduction mass (108.1) and/or said second torsional vibration reduction mass (109.1) is a brake disc of a brake unit of said wheel unit (105; 205; 305);
and/or
- said first torsional vibration reduction mass (108.1) and/or said second torsional vibration reduction mass (109.1) is coupled to said wheel (105.2), in particular, to a web element of said wheel (105.2);
and/or
- said first torsional vibration reduction mass (108.1) is coupled to a first side of said wheel (105.2) and said second torsional vibration reduction mass (109.1) is coupled to a second side of said wheel (105.2), in particular, to a web element (105.4) of said wheel (105.2).

12. The running gear unit according to any one of claims 1 to 11, wherein

- said first torsional vibration reduction mass (108.1) is coupled to a first wheel (105.2) of said wheel unit (105; 205; 305) and said second torsional vibration reduction mass (109.1) is coupled to a second wheel (105.2) of said wheel unit (105; 205; 305);
or
- said first torsional vibration reduction mass (108.1) and said second torsional vibration reduction mass (109.1) are coupled to a first wheel (105.2) of said wheel unit (105; 205; 305) while a third torsional vibration reduction mass (118.1) and a fourth torsional vibration reduction mass (119.1) are coupled to a second wheel (105.2) of said wheel unit (105; 205; 305);
or
- said first torsional vibration reduction mass (108.1) and/or said second torsional vibration reduction mass (109.1) is coupled to said wheel unit shaft (105.1), in particular, at a location remote from said wheel (105.2).

13. The running gear unit according to any one of claims 1 to 12, wherein,

- said first torsional vibration reduction mass (108.1) and/or said second torsional vibration reduction mass (109.1) is coupled to said wheel unit (105; 205; 305) via at least one torsional linking arrangement (112, 113; 212, 213; 312, 313), in particular, via a plurality of said torsional linking arrangements (112, 113; 212, 213; 312, 313) distributed along a circumferential direction of said torsional vibration reduction mass (108.1, 109.1);
- said torsional linking arrangement (112, 113; 212, 213; 312, 313) being compliant in said circumferential direction and comprising a first support element (112.1; 212.1; 312.1), a second support element (112.2), and a first spring element (112.4; 212.4; 312.4);
- said first support element (112.1; 212.1; 312.1) being connected to one of said wheel unit (105; 205; 305) and said torsional vibration reduction mass (108.1, 109.1) in a manner rigid in said circumferential direction;
- said second support element (112.2) being connected to the other one of said wheel unit (105; 205; 305) and said torsional vibration reduction mass (108.1, 109.1) in a manner rigid in said circumferential direction;
- said first spring element (112.4; 212.4; 312.4) being arranged and acting kinematically in series between said first support element (112.1; 212.1; 312.1) and said second support element (112.2) to provide said compliance of said linking arrangement (112, 113; 212, 213; 312, 313) at least in a first torsional direction along said circumferential direction,
wherein, in particular,
- said torsional linking arrangement (112, 113; 212, 213; 312, 313) comprises a third support element (112.3) and a second spring element (112.5; 212.5; 312.5), said third support element (112.3) being connected to the other one of said torsional vibration reduction mass and said wheel unit (105; 205; 305) in a manner rigid in said circumferential direction and said second spring element (112.5; 212.5; 312.5) being arranged and acting kinematically in series between said first support element (112.1; 212.1; 312.1) and said third support element (112.3) to provide said compliance in said circumferential direction of said torsional linking arrangement (112, 113; 212, 213; 312, 313) in a second torsional direction opposite to said first torsional direction,
and/or
- said first spring element (112.4; 212.4; 312.4) and/or said second spring element (112.5; 212.5; 312.5) is formed by a leaf spring element;
and/or
- said first spring element (112.4; 212.4; 312.4) and/or said second spring element (112.5; 212.5; 312.5) is formed by at least one section of a generally ring shaped element (212.8, 212.9), said generally ring shaped element (212.8, 212.9), in particular, integrating at least a part of said first support element (112.1; 212.1; 312.1) and/or integrating at least a part of said second support element (112.2).

**14.** The running gear unit according to claim 13, wherein,

- a rigidity of said first spring element (112.4; 212.4; 312.4) and/or said second spring element (112.5; 212.5; 312.5) is selected such that a maximum torsional moment to be transmitted during operation of said running gear unit about said rotational axis between said torsional vibration reduction mass and said wheel unit (105; 205; 305) is taken exclusively by elastic deformation of said spring element of said at least one torsional linking arrangement (112, 113; 212, 213; 312, 313);
and/or
- a rigidity of said first spring element (112.4; 212.4; 312.4) and/or said second spring element (112.5; 212.5; 312.5) is selected such that a maximum torsional moment to be transmitted during operation of said running gear unit about said rotational axis between said torsional vibration reduction mass (108.1, 109.1) and said wheel unit (105; 205; 305) causes a maximum deflection of said spring element, in particular, in said torsional direction, by less than 1.0 mm, preferably less than 0.5 mm, more preferably 0.1 mm to 0.05 mm;
and/or
- said torsional linking arrangement (112, 113; 212, 213; 312, 313) is configured to allow thermally induced expansion in said radial direction between said first torsional vibration reduction mass (108.1) and/or said second torsional vibration reduction mass (109.1) and said wheel unit (105; 205; 305).

**15.** The running gear unit according to claim 13 or 14, wherein

- said torsional linking arrangement (112, 113; 212, 213; 312, 313) comprises a sheet element unit (212, 213; 312, 313) comprising at least one sheet element (220, 221; 320, 321) integrating at least a part of said first spring element (212.4; 312.4) and/or at least a part of said second spring element (212.5; 312.5) and at least a part of said first support element (212.1; 312.1) and/or at least a part of said second support element (112.2), wherein, in particular,
- said at least one sheet element (220, 221; 320, 321) is cut, in particular, die-cut and/or laser-cut, and/or water-jet-cut, to form said first spring element (212.4; 312.4) and/or said second spring element (212.5; 312.5)
and/or
- said sheet element unit (212, 213; 312, 313) comprises a plurality of said sheet elements (220, 221; 320, 321) stacked along said axial direction to form said linking arrangement;
and/or
- said first torsional vibration reduction mass (108.1) is coupled to said wheel unit (205; 305) via at least one first torsional linking arrangement (212, 213; 312, 313) and said second torsional vibration reduction mass (109.1) is coupled to said wheel unit (205; 305) via at least one second torsional linking arrangement (212, 213; 312, 313), said first torsional linking arrangement (212, 213; 312, 313) comprising a different number of said sheet elements (220, 221; 320, 321) stacked along said axial direction than said second torsional linking arrangement (112, 113; 212, 213; 312, 313) to provide said offset between said first reduction resonant frequency and said second reduction resonant frequency.

**16.** The running gear unit according to any one of claims 1 to 15, wherein

- said first torsional vibration reduction mass (108.1; 122.1) is coupled to a web element (105.4; 122.3) of said wheel unit (105; 205; 305) on a first axial side of said web element (105.4; 122.3) and said second torsional vibration reduction mass (109.1; 122.2) is coupled to said wheel unit (105; 205; 305) on a second axial side of said web element (105.4; 122.3);
- said first torsional vibration reduction mass (108.1) and said second torsional vibration reduction mass (109.1) being coupled along said axial direction by an axial linking arrangement (117),
wherein, in particular,
- said web element (105.4) is a web element of said wheel (105.2); and/or
- said axial linking arrangement (117) allows torsional motion between said first torsional vibration reduction mass (108.1; 122.1) and/or said second torsional vibration reduction mass (109.1; 122.2) and said web element (105.4; 122.3) about said axial direction;
and/or
- said axial linking arrangement is coupled to said web element (105.4; 122.3) in a torsionally rigid manner about said axis of rotation (105.3).

**17.** The running gear unit according to any one of claims 1 to 16, wherein

- at least a third torsional vibration reduction mass unit (118, 119) is provided,
- said third torsional vibration reduction mass unit (118, 119) comprising a third torsional vibration reduction mass (118.1, 119.1) coupled to said wheel unit (105; 205; 305) in a torsionally compliant manner about said axis of rotation (105.3);
- said third torsional vibration reduction mass (118.1, 119.1) being configured to oscillate about said axis of rotation (105.3) in counter-phase with respect to a component of said wheel unit (105; 205; 305), in particular, with respect to said wheel (105.2), to reduce torsional vibration of said wheel unit (105; 205; 305);
- said third torsional vibration reduction mass unit (118, 119) defining a third reduction resonant frequency of said counter-phase oscillation of said third torsional vibration reduction mass (118.1, 119.1);
- said third reduction resonant frequency being of the same order as said first reduction resonant frequency and has an further intentional offset from said first reduction resonant frequency and/or from said second reduction resonant frequency,
wherein, in particular,
- said further intentional offset exceeds an offset caused by maximum manufacturing tolerances defined for said running gear unit;
and/or
- said intentional offset between said first reduction resonant frequency and said second reduction resonant frequency is a first intentional offset and said further intentional offset is a second offset, said second offset being 10% to 90%, preferably 25% to 75%, more preferably 40% to 60%, of said first intentional offset;
and/or
- said third reduction resonant frequency is located between said first reduction resonant frequency and said second reduction resonant frequency.

18. A running gear, in particular for a rail vehicle, with at least one running gear unit according to any one of claims 1 to 17.

19. A method of reducing torsional vibration in a running gear unit, in particular for a rail vehicle, comprising a wheel unit (105; 205; 305), a first torsional vibration reduction mass (108.1), and a second torsional vibration reduction mass (109.1), said wheel unit (105; 205; 305) comprising a wheel unit shaft (105.1) and at least one wheel (105.2) configured to run on a track, said wheel unit shaft (105.1) defining an axis of rotation (105.3), said axis of rotation (105.3) defining an axial direction and a radial direction of said wheel unit (105; 205; 305) and a torsional direction about said axis of rotation (105.3), said method comprising:

- coupling said wheel (105.2) to said wheel unit shaft (105.1) in a torsionally rigid manner about said axis of rotation (105.3);
- coupling said first torsional vibration reduction mass (108.1) and said second torsional vibration reduction mass (109.1) to said wheel unit (105; 205; 305) in a torsionally compliant manner about said axis of rotation (105.3), such that each can oscillate about said axis of rotation (105.3) in counter-phase with respect to a component of said wheel unit (105; 205; 305), in particular, with respect to said wheel (105.2), to reduce torsional vibration of said wheel unit (105; 205; 305);
- said wheel unit (105) having an unworn state in which said wheel unit (105) has a torsional vibration resonant frequency,
- said coupling of said first torsional vibration reduction mass (108.1) defining a first reduction resonant frequency of said counter-phase oscillation of said first torsional vibration reduction mass (108.1);

**characterized in that**

- said first reduction resonant frequency is located in the area of said torsional vibration resonant frequency of said wheel unit (105) in said unworn state, and
- said coupling of said second torsional vibration reduction mass (109.1) defines a second reduction resonant frequency of said counter-phase oscillation of said second torsional vibration reduction mass (109.1), which is of the same order as said first reduction resonant frequency and has an intentional offset from said first reduction resonant frequency, said intentional offset exceeding an offset caused by maximum manufacturing tolerances defined for said wheel unit (105).

**Patentansprüche**

1. Fahrwerkseinheit, insbesondere für ein Schienenfahrzeug, umfassend

- eine Radeinheit (105; 205; 305),
- eine erste Torsionsvibrationsreduktionsmasseneinheit (108), und
- eine zweite Torsionsvibrationsreduktionsmasseneinheit (109);
- wobei die Radeinheit (105; 205; 305) eine Radeinheitswelle (105.1) und wenigstens ein Rad (105.2) umfasst,
- wobei die Radeinheitswelle (105.1) eine Rotationsachse (105.3) definiert, wobei die Rotationsachse (105.3) eine axiale Richtung und eine radiale Richtung der Radeinheit (105; 205; 305) sowie eine Torsionsrichtung um die Rotationsachse (105.3) definiert;
- wobei das Rad (105.2) mit der Radeinheitswelle (105.2) in um die Rotationsachse (105.3) torsionsfester Weise gekoppelt ist und dazu ausgebildet ist, auf einem Gleis zu fahren;
- wobei die erste Torsionsvibrationsreduktionsmasseneinheit (108) eine erste Torsionsvibrationsreduktionsmasse (108.1) umfasst, die mit der Radeinheit (105; 205; 305) in einer torsionsnachgiebigen Weise um die Rotationsachse (105.3) gekoppelt ist;
- die zweite Torsionsvibrationsreduktionsmasseneinheit (109) eine zweite Torsionsvibrationsreduktionsmasse (109.1) umfasst, die mit der Radeinheit (105; 205; 305) in einer torsionsnachgiebigen Weise um die Rotationsachse (105.3) gekoppelt ist;
- wobei die erste Torsionsvibrationsreduktionsmasse (108.1) und die zweite Torsionsvibrationsreduktionsmasse (109.1) jeweils dazu ausgebildet sind, dass sie in Bezug auf eine Komponente der Radeinheit (105; 205; 305), insbesondere in Bezug auf das Rad (105.2), gegenphasig um die Rotationsachse (105.3) schwingen, um Torsionsvibrationen der Radeinheit (105; 205; 305) zu verringern;
- wobei die Radeinheit (105) einen unverschlissenen Zustand aufweist, in dem die Radeinheit (105) eine Torsionsvibrationsresonanzfrequenz aufweist,
- wobei die erste Torsionsvibrationsreduktionsmasseneinheit (108) eine erste Reduktionsresonanzfrequenz der Gegenphasenschwingung der ersten Torsionsvibrationsreduktionsmasse (108.1) definiert;

**dadurch gekennzeichnet, dass**

- die erste Reduktionsresonanzfrequenz im Bereich der Torsionsvibrationsresonanzfrequenz der Radeinheit (105) im unverschlissenen Zustand liegt, und
- die zweite Torsionsvibrationsreduktionsmasseneinheit (109) eine zweite Reduktionsresonanzfrequenz der Gegenphasenschwingung der zweiten Torsionsvibrationsreduktionsmasse (109.1) definiert, welche von derselben Größenordnung wie die erste Reduktionsresonanzfrequenz ist und einen beabsichtigten Versatz von der ersten Reduktionsresonanzfrequenz aufweist, wobei der beabsichtigte Versatz einen Versatz übersteigt, der durch maximale Fertigungstoleranzen verursacht wird, die für die Radeinheit (105) definiert sind.

2. Fahrwerkeinheit nach Anspruch 1, wobei

- das wenigstens eine Rad (105.2) einen unverschlissenen Zustand und einen vollständig verschlissenen Zustand aufweist, be idem der Austausch des wenigstens einen Rades (105.2) durch einen Bediener der Fahrwerkeinheit erforderlich ist, und
- die Torsionsvibration der Radeinheit (105; 205; 305) eine erste Radeinheitsresonanzfrequenz in dem unverschlissenen Zustand und eine zweite Radeinheitsresonanzfrequenz in dem vollständig verschlissenen Zustand aufweist,
- wobei die erste Radeinheitsresonanzfrequenz und die zweite Radeinheitsresonanzfrequenz einen Radeinheitslebensdauerresonanzfrequenz-Spalt definieren,
wobei
- die erste Reduktionsresonanzfrequenz im Bereich der ersten Radeinheitsresonanzfrequenz liegt, insbesondere im Wesentlichen der ersten Radeinheitsresonanzfrequenz entspricht;
und/oder
- die zweite Reduktionsresonanzfrequenz im Bereich der zweiten Radeinheitsresonanzfrequenz liegt, insbesondere im Wesentlichen der zweiten Radeinheitsresonanzfrequenz entspricht.

3. Fahrwerkseinheit nach Anspruch 1 oder 2, wobei

- das wenigstens eine Rad (105.2) einen unverschlissenen Zustand und einen vollständig verschlissenen Zustand aufweist, be idem der Austausch des wenigstens einen Rades (105.2) durch einen Bediener der Fahrwerkeinheit erforderlich ist, und
- die Torsionsvibration der Radeinheit (105; 205; 305) eine erste Radeinheitsresonanzfrequenz in dem unverschlissenen Zustand und eine zweite Radeinheitsresonanzfrequenz in dem vollständig verschlissenen Zustand aufweist,

- wobei die erste Radeinheitsresonanzfrequenz und die zweite Radeinheitsresonanzfrequenz einen Radeinheitslebensdauerresonanzfrequenz-Spalt definieren,

wobei

- die erste Reduktionsresonanzfrequenz sich von der ersten Radeinheitsresonanzfrequenz um höchstens 50 %, vorzugsweise höchstens 25 %, weiter vorzugsweise um höchstens 5 bis 15 % des Radeinheitslebensdauerresonanzfrequenz-Spalts unterscheidet;

und/oder

- die zweite Reduktionsresonanzfrequenz sich von der zweiten Radeinheitsresonanzfrequenz um höchstens 50 %, vorzugsweise höchstens 25 %, weiter vorzugsweise um höchstens 5 % bis 15 % des Radeinheitslebensdauerresonanzfrequenz-Spalts unterscheidet;

und/oder

- die zweite Reduktionsresonanzfrequenz sich von der ersten Reduktionsresonanzfrequenz um 20 % bis 100 %, vorzugsweise 30 % bis 80 %, weiter vorzugsweise um 40 % bis 70 % des Radeinheitslebensdauerresonanzfrequenz-Spalts unterscheidet.

4. Das Fahrwerk nach einem der Ansprüche 1 bis 3, wobei

- sich die zweite Reduktionsresonanzfrequenz von der ersten Reduktionsresonanzfrequenz um wenigstens 2 %, vorzugsweise um 5 % bis 25 %, weiter vorzugsweise um 10 % bis 20 %, der ersten Reduktionsresonanzfrequenz unterscheidet,

und/oder

- sich die zweite Reduktionsresonanzfrequenz von der ersten Reduktionsresonanzfrequenz um wenigstens 2 Hz, vorzugsweise um 5 Hz bis 35 Hz, weiter vorzugsweise um 10 Hz bis 20 Hz, unterscheidet,

und/oder

- die erste Reduktionsresonanzfrequenz und/oder die zweite Reduktionsresonanzfrequenz einen Wert von 25 Hz bis 150 Hz, vorzugsweise von 30 Hz bis 120 Hz, weiter vorzugsweise von 55 Hz bis 115 Hz hat.

5. Fahrwerkseinheit nach einem der Ansprüche 1 bis 4, wobei

- die erste Torsionsvibrationsreduktionsmasse (108.1) und/oder die zweite Torsionsvibrationsreduktionsmasse (109.1) mit der Radeinheit (105; 205; 305) über eine Dämpfungsverbindung (115) gekoppelt ist, die eine Dämpfung der Gegenphasenschwingung bereitstellt;

wobei

- die Dämpfungsverbindung (115) insbesondere einen Reibungskontakt zwischen der Torsionsschwingungsreduktionsmasse (108.1, 109.1) und der Radeinheit (105; 205; 305) umfasst,

und/oder

- die Dämpfungsverbindung (115) insbesondere eine Kontaktflächenpaarung (115.1) umfasst, die eine Reibungsdämpfungseigenschaft der Dämpfungsverbidnung (115) definiert.

6. Fahrwerkseinheit nach Anspruch 5, wobei,

- die Dämpfungsverbindung (115) dazu ausgebildet ist, dass sie ein Gegenphasenschwingungsfrequenzband einstellt, insbesondere eine Breite des Gegenphasenschwingungsfrequenzbandes einstellt,

- wobei die Gegenphasenschwingung in dem Gegenphasenschwingungsfrequenzband eine Reduktion der Torsionsvibration der Radeinheit (105; 205; 305) um wenigstens 40 %, vorzugsweise wenigstens 50 %, weiter vorzugsweise wenigstens 70 %, im Vergleich zu einem Referenzzustand bewirkt, in dem die Torsionsvibrationsreduktionsmasse (108.1, 109.1) fehlt oder torsionsfest mit der Radeinheit (105; 205; 305) verbunden ist;

wobei

- das wenigstens eine Rad (105.2) einen unverschlissenen Zustand mit einer ersten Radeinheitsresonanzfrequenz und einen vollständig verschlissenen Zustand, der einen Austausch des wenigstens einen Rads (105.2) erfordert, mit einer zweiten Radeinheitsresonanzfrequenz aufweist, wobei die erste Radeinheitsresonanzfrequenz und die zweite Radeinheitsresonanzfrequenz einen Radeinheitslebensdauerresonanzfrequenz-Spalt definieren und die Breite des Gegenphasenschwingungsfrequenzbands wenigstens 10 %, vorzugsweise wenigstens 15 %, weiter vorzugsweise 10 % bis 65 % des Radeinheitslebensdauerresonanzfrequenz-Spalts beträgt.

7. Fahrwerkseinheit nach Anspruch 5 oder 6, wobei,

- die Dämpfungsverbindung (115) wenigstens ein Zwischenelement (116) mit wenigstens einer Kontaktfläche umfasst, die eine Reibungsdämpfungscharakteristik der Dämpfungsverbindung (115) definiert;
- wobei das Zwischenelement (116) insbesondere eine erste Kontaktfläche aufweist, die die Radeinheit (105; 205; 305) oder die Torsionsvibrationsreduktionsmasse in einer ersten Kontaktpaarung kontaktiert, und eine zweite Kontaktfläche, die eine weitere Komponente der Fahrwerkeinheit in einer zweiten Kontaktpaarung kontaktiert,
wobei, insbesondere,
- die erste Kontaktpaarung und/oder die zweite Kontaktpaarung dazu ausgebildet sind, die Reibungsdämpfungscharakteristik der Dämpfungsverbindung (115) zu definieren;
und/oder
- wenigstens eine an der zweiten Kontaktpaarung beteiligte reibungsreduzierende Kontaktfläche (116.1) dazu ausgebildet ist, einen in der zweiten Kontaktpaarung vorherrschenden Reibungskoeffizienten im Vergleich zu einem in der ersten Kontaktpaarung vorherrschenden ersten Reibungskoeffizienten zu verringern;
und/oder
- wenigstens eine an der ersten Kontaktpaarung und/oder der zweiten Kontaktpaarung beteiligte reibungsreduzierende Kontaktfläche ein reibungsreduzierendes Material, insbesondere eine reibungsreduzierende Beschichtung, umfasst, wobei das reibungsreduzierende Material insbesondere Molybdän und/oder Edelstahl umfasst.

8. Fahrwerkseinheit nach einem der Ansprüche 5 bis 7, wobei,

- die Dämpfungsverbindung (115) wenigstens eine Kontaktflächenpaarung (115.1) und eine Kontaktkrafteinstellvorrichtung (117) umfasst;
- wobei die Kontaktkrafteinstellvorrichtung (117) eine Kontaktkraft definiert, die an der Kontaktflächenpaarung (115.1) herrscht;
- wobei die wenigstens eine Kontaktflächenpaarung (115.1) und die Kontaktkraft eine Reibungsdämpfungscharakteristik der Dämpfungsverbindung (115) definieren;
- wobei die Kontaktkrafteinstellvorrichtung (117) insbesondere ein Federelement (117.4) umfasst, das die Kontaktkraft definiert.

9. Fahrwerkseinheit nach einem der Ansprüche 5 bis 8, wobei,

- die Dämpfungsverbindung (115) wenigstens ein Zwischenelement (116) aufweist;
- wobei das wenigstens eine Zwischenelement (116) die Radeinheit (105; 205; 305) über eine Radeinheitskontaktfläche (105.5) kontaktiert und einen maximalen Durchmesser und/oder einen minimalen Durchmesser in der radialen Richtung definiert,
wobei, insbesondere,
- sich das Zwischenelement (116) in der radialen Richtung über die Radeinheitskontaktfläche (105.5) hinaus erstreckt;
und/oder
- die dem Zwischenelement (116) zugeordnete Torsionsvibrationsreduktionsmasse einen maximalen Reduktionsmassendurchmesser in der radialen Richtung aufweist und das Zwischenelement (116) einen maximalen Zwischenelementdurchmesser in der radialen Richtung aufweist, der 50 % bis 120 %, vorzugsweise 65 % bis 110 %, weiter vorzugsweise 75 % bis 90 %, des maximalen Reduktionsmassendurchmessers beträgt;
und/oder
- die dem Zwischenelement (116) zugeordnete Torsionsvibrationsreduktionsmasse einen minimalen Reduktionsmassendurchmesser in der radialen Richtung aufweist und das Zwischenelement (116) einen minimalen Zwischenelementdurchmesser in der radialen Richtung aufweist, der 50 % bis 120 %, vorzugsweise 65 % bis 110 %, weiter vorzugsweise 75 % bis 90 %, des minimalen Reduktionsmassendurchmessers beträgt.

10. Fahrwerkseinheit nach Anspruch 9, wobei,

- das Zwischenelement (116) ein im Wesentlichen ringförmiges Element ist; und/oder
- das Zwischenelement (116) als Hitzeschildelement ausgebildet ist, das die Radeinheit (105; 205; 305) vor Wärme, insbesondere Strahlungswärme, die von der zugehörigen Torsionsvibrationsreduktionsmasse (108.1, 109.1) ausgeht, abschirmt;
und/oder
- das Zwischenelement (116) wenigstens ein Flachelement, insbesondere ein Metallelement, umfasst.

**11.** Fahrwerkseinheit nach einem der Ansprüche 1 bis 10, wobei

- die erste Torsionsvibrationsreduktionsmasse (108.1) und/oder die zweite Torsionsvibrationsreduktionsmasse (109.1) eine Bremsscheibe einer Bremseinheit der Radeinheit (105; 205; 305) ist;
und/oder
- die erste Torsionsvibrationsreduktionsmasse (108.1) und/oder die zweite Torsionsvibrationsreduktionsmasse (109.1) mit dem Rad (105.2), insbesondere mit einem Stegelement des Rades (105.2), gekoppelt ist und/oder
- die erste Torsionsvibrationsreduktionsmasse (108.1) mit einer ersten Seite des Rades (105.2) und die zweite Torsionsvibrationsreduktionsmasse (109.1) mit einer zweiten Seite des Rades (105.2), insbesondere mit einem Stegelement (105.4) des Rades (105.2), verbunden ist.

**12.** Fahrwerkseinheit nach einem der Ansprüche 1 bis 11, wobei

- die erste Torsionsvibrationreduktionsmasse (108.1) mit einem ersten Rad (105.2) der Radeinheit (105; 205; 305) gekoppelt ist und die zweite Torsionsvibrationsreduktionsmasse (109.1) mit einem zweiten Rad (105.2) der Radeinheit (105; 205; 305) gekoppelt ist;
oder
- die Torsionsvibrationsreduktionsmasse (108.1) und die zweite Torsionsvibrationsreduktionsmasse (109.1) mit einem ersten Rad (105.2) der Radeinheit (105; 205; 305) gekoppelt sind, während eine dritte Torsionsvibrationsreduktionsmasse (118.1) und eine vierte Torsionsvibrationsreduktionsmasse (119.1) mit einem zweiten Rad (105.2) der Radeinheit (105; 205; 305) gekoppelt sind;
oder
- die erste Torsionsvibrationsreduktionsmasse (108.1) und/oder die zweite Torsionsvibrationsreduktionsmasse (109.1) mit der Radeinheitswelle (105.1) gekoppelt ist, insbesondere an einer vom Rad (105.2) entfernten Stelle.

**13.** Fahrwerkseinheit nach einem der Ansprüche 1 bis 12, wobei,

- die erste Torsionsvibrationsreduktionsmasse (108.1) und/oder die zweite Torsionsvibrationsreduktionsmasse (109.1) mit der Radeinheit (105; 205; 305) über wenigstens eine Torsionsverbindungsanordnung (112, 113; 212, 213; 312, 313) gekoppelt ist, insbesondere über eine Vielzahl der Torsionsverbindungsanordnungen (112, 113; 212, 213; 312, 313), die entlang einer Umfangsrichtung der Torsionsvibrationsreduktionsmasse (108.1, 109.1) verteilt sind;
- wobei die Torsionsverbindungsanordnung (112, 113; 212, 213; 312, 313) in der Umfangsrichtung nachgiebig ist und ein erstes Stützelement (112.1; 212.1; 312.1), ein zweites Stützelement (112.2) und ein erstes Federelement (112.4; 212.4; 312.4) umfasst;
- wobei das erste Stützelement (112.1; 212.1; 312.1) mit einer aus die Radeinheit (105; 205; 305) und die Torsionsvibrationsreduktionsmasse (108.1, 109.1) in einer in der Umfangsrichtung starren Weise verbunden ist;
- das zweite Stützelement (112.2) mit der anderen aus die Radeinheit (105; 205; 305) und die Torsionsvibrationsreduktionsmasse (108.1, 109.1) in einer in der Umfangsrichtung starren Weise verbunden ist;
- wobei das erste Federelement (112.4; 212.4; 312.4) in Reihe und kinematisch wirkend zwischen dem ersten Stützelement (112.1; 212.1; 312.1) und dem zweiten Stützelement (112.2) angeordnet ist, um die Nachgiebigkeit der Verbindungsanordnung (112, 113; 212, 213; 312, 313) zumindest in einer ersten Torsionsrichtung entlang der Umfangsrichtung bereitzustellen,
wobei, insbesondere,
- die Torsionsverbindungsanordnung (112, 113; 212, 213; 312, 313) ein drittes Stützelement (112.3) und ein zweites Federelement (112.5; 212.5; 312.5) umfasst, wobei das dritte Stützelement (112.3) mit der anderen aus die Torsionsvibrationsreduktionsmasse und die Radeinheit (105; 205; 305) in der Umfangsrichtung starr verbunden ist und das zweite Federelement (112.5; 212.5; 312.5) in Reihe und kinematisch wirkend zwischen dem ersten Stützelement (112.1; 212.1; 312.1) und dem dritten Stützelement (112.2) angeordnet ist, um die Nachgiebigkeit der Verbindungsanordnung (112, 113; 212, 213; 312, 313) zumindest in einer zweiten Torsionsrichtung, gegenüberliegend der ersten Torsionsrichtung, bereitzustellen,
und/oder
- das erste Federelement (112.4; 212.4; 312.4) und/oder das zweite Federelement (112.5; 212.5; 312.5) durch ein Blattfederelement gebildet ist;
und/oder
- das erste Federelement (112.4; 212.4; 312.4) und/oder das zweite Federelement (112.5; 212.5; 312.5) durch wenigstens einen Abschnitt eines allgemein ringförmigen Elements (212.8, 212.9) gebildet ist, wobei das allgemein ringförmige Element (212.8, 212.9) insbesondere wenigstens einen Teil des ersten Stützelements (112.1; 212.1; 312.1) integriert und/oder wenigstens einen Teil des zweiten Stützelements (112.2) integriert.

**14.** Fahrwerkseinheit nach Anspruch 13, wobei,

- eine Steifigkeit des ersten Federelements (112.4; 212.4; 312.4) und/oder des zweiten Federelements (112.5; 212.5; 312.5) so gewählt ist, dass ein während des Betriebs der Fahrwerkseinheit um die Rotationsachse zu übertragendes maximales Torsionsmoment zwischen der Torsionsvibrationsreduktionsmasse und der Radeinheit (105; 205; 305) ausschließlich durch elastische Verformung des Federelements der wenigstens einen Torsionsverbindungsanordnung (112, 113; 212, 213; 312, 313) aufgenommen wird;
und/oder
- eine Steifigkeit des ersten Federelements (112.4; 212.4; 312.4) und/oder des zweiten Federelements (112.5; 212.5; 312.5) so gewählt ist, dass ein während des Betriebs der Fahrwerkseinheit um die Rotationschse zu übertragendes maximales Torsionsmoment zwischen der Torsionsvibrationsreduktionsmasse (108. 1, 109.1) und der Radeinheit (105; 205; 305) eine maximale Auslenkung des Federelements, insbesondere, in Torsionsrichtung, von weniger als 1,0 mm, vorzugsweise weniger als 0,5 mm, weiter vorzugsweise 0,1 mm bis 0,05 mm, bewirkt;
und/oder
- die Torsionsverbindungsanordnung (112, 113; 212, 213; 312, 313) dazu ausgebildet ist, um eine thermisch induzierte Ausdehnung in der radialen Richtung zwischen der ersten Torsionsvibrationsreduktionsmasse (108.1) und/oder der zweiten Torsionsvibrationsreduktionsmasse (109.1) und der Radeinheit (105; 205; 305) zu ermöglichen.

**15.** Fahrwerkeinheit nach Anspruch 13 oder 14, wobei

- die Torsionsverbindungsanordnung (112, 113; 212, 213; 312, 313) eine Flachelementeinheit (212, 213; 312, 313) umfasst, die wenigstens ein Flachelement (220, 221; 320, 321) umfasst, das wenigstens einen Teil des ersten Federelements (212.4; 312.4) und/oder wenigstens einen Teil des zweiten Federelements (212.5; 312.5) und wenigstens einen Teil des ersten Stützelements (212.1; 312.1) und/oder wenigstens einen Teil des zweiten Stützelements (112.2) integriert,
wobei, insbesondere,
- das wenigstens eine Flachelement (220, 221; 320, 321) geschnitten, insbesondere gestanzt und/oder lasergeschnitten und/oder wasserstrahlgeschnitten wird, um das erste Federelement (212.4; 312.4) und/oder das zweite Federelement (212.5; 312.5) zu bilden
und/oder
- die Flachelementeinheit (212, 213; 312, 313) eine Vielzahl der Flachelemente (220, 221; 320, 321) umfasst, die entlang der axialen Richtung gestapelt sind, um die Verbindungsanordnung zu bilden;
und/oder
- die erste Torsionsvibrationsreduktionsmasse (108.1) mit der Radeinheit (205; 305) über wenigstens eine erste Torsionsverbindungsanordnung (212, 213; 312, 313) gekoppelt ist und die zweite Torsionsvibrationsreduktionsmasse (109. 1) mit der Radeinheit (205; 305) über wenigstens eine zweite Torsionsverbindungsanordnung (212, 213; 312, 313) gekoppelt ist, wobei die erste Torsionsverbindungsanordnung (212, 213; 312, 313) eine andere Anzahl der entlang der axialen Richtung gestapelten Flachelemente (220, 221; 320, 321) umfasst als die zweite Torsionsverbindungsanordnung (112, 113; 212, 213; 312, 313), um den Versatz zwischen der ersten Reduktionsresonanzfrequenz und der zweiten Reduktionsresonanzfrequenz bereitzustellen.

**16.** Fahrwerkseinheit nach einem der Ansprüche 1 bis 15, wobei

- die erste Torsionsvibrationsreduktionsmasse (108.1; 122.1) mit einem Stegelement (105.4; 122.3) der Radeinheit (105; 205; 305) auf einer ersten axialen Seite des Stegelements (105.4; 122.3) gekoppelt ist und die zweite Torsionsvibrationsreduktionsmasse (109.1; 122.2) mit der Radeinheit (105; 205; 305) auf einer zweiten axialen Seite des Stegelements (105.4; 122.3) gekoppelt ist;
- wobei die erste Torsionsvibrationsreduktionsmasse (108.1) und die zweite Torsionsvibrationsreduktionsmasse (109.1) entlang der axialen Richtung durch eine axiale Verbindungsanordnung (117) gekoppelt sind,
wobei, insbesondere,
- das Stegelement (105.4) ein Stegelement des Rades (105.2) ist; und/oder
- die axiale Verbindungsanordnung (117) eine Torsionsbewegung zwischen der ersten Torsionsvibrationsreduktionsmasse (108.1; 122.1) und/oder der zweiten Torsionsvibrationsreduktionsmasse (109.1; 122.2) und dem Stegelement (105.4; 122.3) um die axiale Richtung ermöglicht;

und/oder
- die axiale Verbindungsanordnung mit dem Stegelement (105.4; 122.3) um die Rotationsachse (105.3) torsionssteif gekoppelt ist.

**17.** Fahrwerkseinheit nach einem der Ansprüche 1 bis 16, wobei

- wenigstens eine dritte Torsionsschwingungsmasseneinheit (118, 119) vorgesehen ist,
- wobei die dritte Torsionsvibrationsreduktionsmasseneinheit (118, 119) eine dritte Torsionsvibrationsreduktionsmasse (118.1, 119.1) umfasst, die mit der Radeinheit (105; 205; 305) um die Rotationsachse (105.3) in torsionsnachgiebiger Weise gekoppelt ist;
- wobei die dritte Torsionsvibrationsreduktionsmasse (118.1, 119.1) dazu ausgebildet ist, dass sie in Bezug auf eine Komponente der Radeinheit (105; 205; 305), insbesondere in Bezug auf das Rad (105.2), gegenphasig um die Rotationsachse (105.3) schwingt, um Torsionsvibrationen der Radeinheit (105; 205; 305) zu reduzieren;
- wobei die dritte Torsionsvibrationsreduktionsmasseneinheit (118, 119) eine dritte Reduktionsresonanzfrequenz der Gegenphasenschwingung der dritten Torsionsvibrationsreduktionsmasse (118.1, 119.1) definiert;
- wobei die dritte Reduktionsresonanzfrequenz von der gleichen Größenordnung wie die erste Reduktionsresonanzfrequenz ist und einen weiteren beabsichtigten Versatz von der ersten Reduktionsresonanzfrequenz und/oder von der zweiten Reduktionsresonanzfrequenz aufweist,
wobei, insbesondere,
- der weitere beabsichtigte Versatz einen Versatz übersteigt, der durch maximale Fertigungstoleranzen verursacht wird, die für die Fahrwerkeinheit definiert sind;
und/oder
- der beabsichtigte Versatz zwischen der ersten Reduktionsresonanzfrequenz und der zweiten Reduktionsresonanzfrequenz ein erster beabsichtigter Versatz ist und der weitere beabsichtigte Versatz ein zweiter Versatz ist, wobei der zweite Versatz 10 % bis 90 %, vorzugsweise 25 % bis 75 %, weiter vorzugsweise 40 % bis 60 %, des ersten beabsichtigten Versatzes beträgt;
und/oder
- die dritte Reduktionsresonanzfrequenz zwischen der ersten Reduktionsresonanzfrequenz und der zweiten Reduktionsresonanzfrequenz liegt.

**18.** Fahrwerk, insbesondere für ein Schienenfahrzeug, mit wenigstens einer Fahrwerkseinheit nach einem der Ansprüche 1 bis 17.

**19.** Verfahren zur Reduzierung von Torsionsvibrationen in einer Fahrwerkseinheit, insbesondere für ein Schienenfahrzeug, umfassend eine Radeinheit (105; 205; 305), eine erste Torsionsvibrationsreduktionsmasse (108.1) und einer zweiten Torsionsvibrationsreduktionsmasse (109.1), wobei die Radeinheit (105; 205; 305) eine Radeinheitswelle (105) und wenigstens ein Rad (105.2) umfasst, das dazu ausgebildet ist auf einem Gleis zu fahren, wobei die Radeinheitswelle (105.1) eine Rotationsachse (105.3) definiert, wobei die Rotationsachse (105.3) eine axiale Richtung und eine radiale Richtung der Radeinheit (105; 205; 305) und eine Torsionsrichtung um die Drehachse (105.3) definiert, wobei das Verfahren umfasst:

- Koppeln des Rades (105.2) mit der Radeinheitswelle (105.1) in einer torsionssteifen Weise um die Rotationsachse (105.3);
- Koppeln der ersten Torsionsvibrationsreduktionsmasse (108.1) und der zweiten Torsionsvibrationsreduktionsmasse (109.1) mit der Radeinheit (105; 205; 305) in einer torsionsnachgiebigen Weise um die Rotationsachse (105.3), so dass jede um die Rotationsachse (105.3) gegenphasig in Bezug auf eine Komponente der Radeinheit (105; 205; 305), insbesondere in Bezug auf das Rad (105.2), schwingen kann, um Torsionsvibrationen der Radeinheit (105; 205; 305) zu reduzieren;
- wobei die Radeinheit (105) einen unverschlissenen Zustand aufweist, in dem die Radeinheit (105) eine Torsionsvibrationsresonanzfrequenz aufweist,
- wobei das Koppeln der ersten Torsionsvibrationsreduktionsmasse (108.1) eine erste Reduktionsresonanzfrequenz der Gegenphasenschwingung der ersten Torsionsvibrationsreduktionsmasse (108.1) definiert;

**dadurch gekennzeichnet, dass**

- die erste Reduktionsresonanzfrequenz im Bereich der Torsionsvibrationsresonanzfrequenz der Radeinheit (105) im unverschlissenen Zustand liegt, und
- das Koppeln der zweiten Torsionsvibrationsreduktionsmasse (109.1) eine zweite Reduktionsresonanzfrequenz der Gegenphasenschwingung der zweiten Torsionsvibrationsreduktionsmasse (109.1) definiert, die von derselben Größenordnung wie die erste Reduktionsresonanzfrequenz ist und einen beabsichtigen Versatz von der ersten Reduktionsresonanzfrequenz aufweist, wobei der beabsichtigte Versatz einen Versatz übersteigt, der durch maximale Fertigungstoleranzen verursacht wird, die für die Radeinheit (105) definiert sind.

**Revendications**

1. Unité de train de roulement, en particulier pour un véhicule ferroviaire, comprenant

   - une unité roue (105 ; 205 ; 305),
   - une première unité de masse de réduction des vibrations de torsion (108), et
   - une deuxième unité de masse de réduction des vibrations de torsion (109) ;
   - ladite unité de roue (105 ; 205 ; 305) comprenant un arbre d'unité de roue (105.1) et au moins une roue (105.2),
   - ledit arbre d'unité de roue (105.1) définissant un axe de rotation (105.3), ledit axe de rotation (105.3) définissant une direction axiale et une direction radiale de ladite unité de roue (105 ; 205 ; 305) ainsi qu'une direction de torsion autour ledit axe de rotation (105.3) ;
   - ladite roue (105.2) étant couplée audit arbre d'unité de roue (105.1) d'une manière rigide en torsion autour dudit axe de rotation (105.3) et étant configurée pour rouler sur une voie ;
   - ladite première unité de masse de réduction des vibrations de torsion (108) comprenant une première masse de réduction des vibrations de torsion (108.1) couplée à ladite unité de roue (105 ; 205 ; 305) d'une manière souple en torsion autour dudit axe de rotation (105.3) ;
   - ladite seconde unité de masse de réduction des vibrations de torsion (109) comprenant une seconde masse de réduction des vibrations de torsion (109.1) couplée à ladite unité de roue (105 ; 205 ; 305) d'une manière souple en torsion autour dudit axe de rotation (105.3) ;
   - ladite première masse de réduction des vibrations de torsion (108.1) et ladite deuxième masse de réduction des vibrations de torsion (109.1) étant chacune configurée pour osciller autour dudit axe de rotation (105.3) en contre-phase par rapport à un composant de ladite unité de roue (105 ; 205 ; 305), en particulier, par rapport à ladite roue (105.2), pour réduire les vibrations de torsion de ladite unité de roue (105 ; 205 ; 305) ;
   - ladite unité de roue (105) ayant un état non usé où ladite unité de roue (105) a une fréquence de résonance de vibrations de torsion,
   - ladite première unité de masse de réduction des vibrations de torsion (108) définissant une première fréquence de résonance de réduction de ladite oscillation en contre-phase de ladite première masse de réduction des vibrations de torsion (108.1);

   **caractérisée en ce que**

   - ladite première fréquence de résonance de réduction est située au niveau de ladite fréquence de résonance de vibrations de torsion de ladite unité de roue (105) dans ledit état non usé, et
   - ladite seconde unité de masse de réduction de vibration de torsion (109) définit une seconde fréquence de résonance de réduction de ladite oscillation en contre-phase de ladite seconde masse de réduction de vibration de torsion (109.1), qui est du même ordre que ladite première fréquence de résonance de réduction et a une intentionnelle décalage par rapport à ladite première fréquence de résonance de réduction, ledit décalage intentionnel dépassant un décalage provoqué par des tolérances de fabrication maximales définies pour ledit train roulant.

2. Unité de train de roulement selon la revendication 1, dans laquelle

   - ladite au moins une roue (105.2) a un état non usé et un état complètement usé, où l'échange de ladite au moins une roue (105.2) est requis par un opérateur dudit train de roulement, et
   - ladite vibration de torsion de ladite unité de roue (105 ; 205 ; 305) a une première fréquence de résonance d'unité de roue dans ledit état non usé et une seconde fréquence de résonance d'unité de roue dans ledit état complètement usé,
   - ladite première fréquence de résonance d'unité de roue et ladite seconde fréquence de résonance d'unité de roue définissant un écart de fréquence de résonance de durée de vie d'unité de roue,
   où
   - ladite première fréquence de résonance de réduction est située dans la zone de ladite première fréquence de résonance d'unité de roue, en particulier, correspond sensiblement à ladite première fréquence de résonance d'unité de roue ;
et/ou
- ladite deuxième fréquence de résonance de réduction est située dans la zone de ladite deuxième fréquence de résonance d'unité de roue, en particulier, correspond sensiblement à ladite deuxième fréquence de résonance d'unité de roue ;

3. Unité de train de roulement selon la revendication 1 ou 2, dans laquelle

- ladite au moins une roue (105.2) a un état non usé et un état complètement usé, où l'échange de ladite au moins une roue (105.2) est requis par un opérateur dudit train de roulement, et
- ladite vibration de torsion de ladite unité de roue (105 ; 205 ; 305) a une première fréquence de résonance d'unité de roue dans ledit état non usé et une seconde fréquence de résonance d'unité de roue dans ledit état complètement usé,
- ladite première fréquence de résonance d'unité de roue et ladite seconde fréquence de résonance d'unité de roue définissant un écart de fréquence de résonance de durée de vie d'unité de roue,
où
- ladite première fréquence de résonance de réduction diffère de ladite première fréquence de résonance d'unité de roue d'au plus 50 %, de préférence d'au plus 25 %, plus préférablement d'au plus 5 % à 15 %, dudit écart de fréquence de résonance de durée de vie d'unité de roue ;
et/ou
- ladite deuxième fréquence de résonance de réduction diffère de ladite deuxième fréquence de résonance d'unité de roue d'au plus 50 %, de préférence d'au plus 25 %, plus préférablement d'au plus 5 % à 15 %, dudit écart de fréquence de résonance de durée de vie de l'unité de roue ;
et/ou
- ladite deuxième fréquence de résonance de réduction diffère de ladite première fréquence de résonance de réduction de 20 % à 100 %, de préférence de 30 % à 80 %, plus préférablement de 40 % à 70 %, dudit écart de fréquence de résonance de durée de vie d'unité de roue.

4. Unité de train de roulement selon l'une quelconque des revendications 1 à 3, dans laquelle

- ladite seconde fréquence de résonance de réduction diffère de ladite première fréquence de résonance de réduction d'au moins 2 %, de préférence de 5 % à 25 %, plus préférentiellement de 10 % à 20 %, de ladite première fréquence de résonance de réduction,
et/ou
- ladite seconde fréquence de résonance de réduction diffère de ladite première fréquence de résonance de réduction d'au moins 2 Hz, de préférence de 5 Hz à 35 Hz, plus préférentiellement de 10 Hz à 20 Hz,
et/ou
- ladite première fréquence de résonance de réduction et/ou ladite seconde fréquence de résonance de réduction a une valeur de 25 Hz à 150 Hz, de préférence de 30 Hz à 120 Hz, plus préférentiellement de 55 Hz à 115 Hz.

5. Unité de train de roulement selon l'une quelconque des revendications 1 à 4, dans laquelle,

- ladite première masse de réduction des vibrations de torsion (108.1) et/ou ladite deuxième masse de réduction des vibrations de torsion (109.1) est couplée à ladite unité de roue (105 ; 205 ; 305) via une liaison d'amortissement (115) assurant l'amortissement de ladite oscillation en contre-phase ;
où
- ladite liaison d'amortissement (115), en particulier, comprend un contact de friction entre ladite masse de réduction des vibrations de torsion (108.1, 109.1) et ladite unité de roue (105 ; 205 ; 305)
et/ou
- ladite liaison d'amortissement (115), notamment, comporte un couple de surfaces de contact (115.1) définissant une caractéristique d'amortissement par frottement de ladite liaison d'amortissement (115).

6. Unité de train de roulement selon la revendication 5, dans laquelle

- ladite liaison d'amortissement (115) est configurée pour ajuster une bande de fréquence d'oscillation en contre-phase, en particulier, pour ajuster une largeur de ladite bande de fréquence d'oscillation en contre-phase,
- ladite oscillation en contre-phase, dans ladite bande de fréquence d'oscillation en contre-phase, fournissant une réduction de ladite vibration de torsion de ladite unité de roue (105 ; 205 ; 305) d'au moins 40 %, de préférence d'au moins 50 %, plus préférablement d'au moins 70 %, par rapport à un état de référence, où ladite masse de réduction des vibrations de torsion (108.1, 109.1) est manquante ou est couplée rigidement en torsion à ladite unité de roue (105 ; 205 ; 305) ;

où

- ladite au moins une roue (105.2) a un état non usé avec une première fréquence de résonance d'unité de roue et un état complètement usé nécessitant l'échange de ladite au moins une roue (105.2) avec une seconde fréquence de résonance d'unité de roue, ladite première fréquence de résonance d'unité de roue et ladite seconde fréquence de résonance d'unité de roue définissant un écart de fréquence de résonance de durée de vie d'unité de roue, et ladite largeur de ladite bande de fréquence d'oscillation en contre-phase est d'au moins 10 %, de préférence d'au moins 15 %, plus préférablement de 10 % à 65 %, dudit écart de fréquence de résonance de durée de vie d'unité de roue.

7. Unité de train de roulement selon la revendication 5 ou 6, dans laquelle,

- ladite liaison d'amortissement (115) comprend au moins un élément intermédiaire (116) avec au moins une surface de contact définissant une caractéristique d'amortissement par frottement de ladite liaison d'amortissement (115) ;
- ledit élément intermédiaire (116), en particulier, ayant une première surface de contact en contact avec ladite unité de roue (105 ; 205 ; 305) ou ladite masse de réduction de vibration de torsion dans un premier appariement de contact et une deuxième surface de contact en contact avec un autre composant dudit train de roulement dans un second appariement de contacts,
dans laquelle, notamment,
- ledit premier appariement de contacts et/ou ledit second appariement de contacts est configuré pour définir ladite caractéristique d'amortissement par frottement de ladite liaison d'amortissement (115) ;
et/ou
- au moins une surface de contact réduisant le frottement (116.1) participant audit deuxième appariement de contacts est configurée pour réduire un coefficient de frottement prévalant dans ledit deuxième appariement de contacts par rapport à un premier coefficient de frottement prévalant dans ledit premier appariement de contacts ;
et/ou
- au moins une surface de contact réduisant le frottement participant audit premier appariement de contact et/ou audit deuxième appariement de contact comprend un matériau réduisant le frottement, en particulier un revêtement réduisant le frottement, ledit matériau réduisant le frottement, notamment, comprenant du molybdène et/ou de l'acier inoxydable.

8. Unité de train de roulement selon l'une quelconque des revendications 5 à 7, dans laquelle

- ladite liaison d'amortissement (115) comprend au moins un appariement de surfaces de contact (115.1) et un dispositif de réglage de force de contact (117) ;
- ledit dispositif de réglage de force de contact (117) définissant une force de contact prévalant au niveau dudit appariement de surfaces de contact (115.1) ;
- ledit au moins un prévalant de surfaces de contact (115.1) et ladite force de contact définissant une caractéristique d'amortissement par frottement de ladite liaison d'amortissement (115) ;
- ledit dispositif de réglage de force de contact (117), notamment, comprenant un élément ressort (117.4) définissant ladite force de contact.

9. Unité de train de roulement selon l'une quelconque des revendications 5 à 8, dans laquelle

- ladite liaison d'amortissement (115) comporte au moins un élément intermédiaire (116) ;
- ledit au moins un élément intermédiaire (116) contactant ladite unité de roue (105 ; 205 ; 305) sur une surface de contact d'unité de roue (105.5) et définissant un diamètre maximal et/ou un diamètre minimal dans ladite direction radiale, dans laquelle, en particulier,
- ledit élément intermédiaire (116), dans ladite direction radiale, s'étend au-delà de ladite surface de contact d'unité de roue (105.5) ;
et/ou
- ladite masse de réduction des vibrations de torsion associée audit élément intermédiaire (116) a un diamètre de masse de réduction maximum dans ladite direction radiale et ledit élément intermédiaire (116) a un diamètre d'élément intermédiaire maximum dans ladite direction radiale, qui est de 50 % à 120 %, de préférence 65 % à 110 %, plus préférablement 75 % à 90 %, dudit diamètre maximal de masse de réduction ; et/ou

- ladite masse de réduction des vibrations de torsion associée audit élément intermédiaire (116) a un diamètre de masse de réduction minimum dans ladite direction radiale et ledit élément intermédiaire (116) a un diamètre d'élément intermédiaire minimum dans ladite direction radiale, qui est de 50 % à 120 %, de préférence 65 % à 110 %, plus préférablement 75 % à 90 %, dudit diamètre de masse de réduction minimum;

**10.** Unité de train de roulement selon la revendication 9, dans laquelle

- ledit élément intermédiaire (116) est un élément sensiblement annulaire ; et/ou

- ledit élément intermédiaire (116) est configuré comme un élément de bouclier thermique protégeant ladite unité de roue (105 ; 205 ; 305) de la chaleur, en particulier de la chaleur rayonnée, émise par ladite masse de réduction des vibrations de torsion associée (108.1, 109.1) ; et/ou

- ledit élément intermédiaire (116) comprend au moins un élément en feuille, notamment un élément en tôle.

**11.** Unité de train de roulement selon l'une quelconque des revendications 1 à 10, dans laquelle

- ladite première masse de réduction des vibrations de torsion (108.1) et/ou ladite seconde masse de réduction des vibrations de torsion (109.1) est un disque de frein d'une unité de freinage de ladite unité de roue (105 ; 205 ; 305) ; et/ou

- ladite première masse de réduction des vibrations de torsion (108.1) et/ou ladite seconde masse de réduction des vibrations de torsion (109.1) est couplée à ladite roue (105.2), en particulier, à un élément d'âme de ladite roue (105.2) ; et/ou

- ladite première masse de réduction des vibrations de torsion (108.1) est couplée à un premier côté de ladite roue (105.2) et ladite deuxième masse de réduction des vibrations de torsion (109.1) est couplée à un deuxième côté de ladite roue (105.2), en particulier, à un élément d'âme (105.4) de ladite roue (105.2) ;

**12.** Unité de train de roulement selon l'une quelconque des revendications 1 à 11, dans laquelle

- ladite première masse de réduction des vibrations de torsion (108.1) est couplée à une première roue (105.2) de ladite unité de roue (105 ; 205 ; 305) et ladite deuxième masse de réduction des vibrations de torsion (109.1) est couplée à une deuxième roue (105.2) de ladite unité de roue (105 ; 205 ; 305) ; et/ou

- ladite première masse de réduction des vibrations de torsion (108.1) et ladite deuxième masse de réduction des vibrations de torsion (109.1) sont couplées à une première roue (105.2) de ladite unité de roue (105 ; 205 ; 305) tandis qu'une troisième masse de réduction des vibrations de torsion (118.1) et une quatrième masse de réduction des vibrations de torsion (119.1) sont couplées à une seconde roue (105.2) de ladite unité de roue (105 ; 205 ; 305) ; et/ou

- ladite première masse de réduction des vibrations de torsion (108.1) et/ou ladite deuxième masse de réduction des vibrations de torsion (109.1) est couplée audit arbre d'unité de roue (105.1), en particulier, à un emplacement éloigné de ladite roue (105.2).

**13.** Unité de train de roulement selon l'une quelconque des revendications 1 à 12, dans laquelle

- ladite première masse de réduction des vibrations de torsion (108.1) et/ou ladite deuxième masse de réduction des vibrations de torsion (109.1) est couplée à ladite unité de roue (105 ; 205 ; 305) via au moins un agencement de liaison de torsion (112, 113 ; 212, 213 ; 312, 313), en particulier, via une pluralité desdits agencements de liaison de torsion (112, 113 ; 212, 213 ; 312, 313) répartis le long d'une direction circonférentielle de ladite masse de réduction de vibration de torsion (108.1, 109.1) ;

- ledit agencement de liaison en torsion (112, 113 ; 212, 213 ; 312, 313) étant souple dans ladite direction circonférentielle et comprenant un premier élément de support (112.1 ; 212.1 ; 312.1), un deuxième élément de support (112.2) et un premier élément ressort (112.4 ; 212.4 ; 312.4) ;

- ledit premier élément de support (112.1 ; 212.1 ; 312.1) étant relié à l'une de ladite unité de roue (105 ; 205 ;

EP 2 960 073 B1

305) et de ladite masse de réduction des vibrations de torsion (108.1, 109.1) d'une manière rigide dans ladite direction circonférentielle ;
- ledit second élément de support (112.2) étant relié à l'autre de ladite unité de roue (105 ; 205 ; 305) et de ladite masse de réduction de vibration de torsion (108.1, 109.1) d'une manière rigide dans ladite direction circonférentielle ;
- ledit premier élément de ressort (112.4 ; 212.4 ; 312.4) étant agencé et agissant cinématiquement en série entre ledit premier élément de support (112.1 ; 212.1 ; 312.1) et ledit second élément de support (112.2) pour fournir ladite souplesse dudit agencement de liaison (112, 113 ; 212, 213 ; 312, 313) au moins dans une première direction de torsion le long de ladite direction circonférentielle,

dans laquelle, notamment,

- ledit agencement de liaison en torsion (112, 113 ; 212, 213 ; 312, 313) comprend un troisième élément de support (112.3) et un deuxième élément de ressort (112.5 ; 212.5 ; 312.5), ledit troisième élément de support (112.3) étant relié à l'autre parmi ladite masse de réduction des vibrations de torsion et ladite unité de roue (105 ; 205 ; 305) de manière rigide dans ladite direction circonférentielle et ledit second élément de ressort (112.5 ; 212.5 ; 312.5) étant agencé et agissant cinématiquement en série entre ledit premier support (112.1 ; 212.1 ; 312.1) et ledit troisième élément de support (112.3) pour fournir ladite souplesse dans ladite direction circonférentielle dudit agencement de liaison de torsion (112, 113 ; 212, 213 ; 312, 313) dans une seconde direction de torsion opposée à ladite première direction de torsion,
et/ou
- ledit premier élément ressort (112.4 ; 212.4 ; 312.4) et/ou ledit second élément ressort (112.5 ; 212.5 ; 312.5) est formé par un élément ressort à lame ;
et/ou
- ledit premier élément ressort (112.4 ; 212.4 ; 312.4) et/ou ledit second élément ressort (112.5 ; 212.5 ; 312.5) est formé par au moins une section d'un élément généralement en forme d'anneau (212.8, 212.9), ledit élément généralement en forme d'anneau (212.8, 212.9), en particulier, intégrant au moins une partie dudit premier élément de support (112.1 ; 212.1 ; 312.1) et/ou intégrant au moins une partie dudit second élément de support (112.2).

**14.** Unité de train de roulement selon la revendication 13, dans laquelle

- une rigidité dudit premier élément ressort (112.4 ; 212.4 ; 312.4) et/ou dudit second élément ressort (112.5 ; 212.5 ; 312.5) est sélectionnée de sorte qu'un moment de torsion maximum à transmettre pendant le fonctionnement de ladite unité de train de roulement autour dudit axe de rotation entre ladite masse de réduction des vibrations de torsion et ladite unité de roue (105 ; 205 ; 305) est pris exclusivement par déformation élastique dudit élément ressort dudit au moins un agencement de liaison de torsion (112, 113 ; 212, 213 ; 312, 313) ;
et/ou
- une rigidité dudit premier élément de ressort (112.4 ; 212.4 ; 312.4) et/ou dudit second élément de ressort (112.5 ; 212.5 ; 312.5) est sélectionnée de sorte qu'un moment de torsion maximum à transmettre pendant le fonctionnement de ladite unité de train de roulement autour dudit axe de rotation entre ladite masse de réduction des vibrations de torsion (108.1, 109.1) et ladite unité de roue (105 ; 205 ; 305) provoque une déviation maximale dudit élément de ressort, en particulier, dans ladite direction de torsion, de moins de 1,0 mm, de préférence de moins de 0,5 mm, plus préférablement 0,1 mm à 0,05 mm;
et/ou
- ledit agencement de liaison de torsion (112, 113 ; 212, 213 ; 312, 313) est configuré pour permettre une dilatation thermiquement induite dans ladite direction radiale entre ladite première masse de réduction de vibration de torsion (108.1) et/ou ladite seconde masse de réduction de vibration de torsion (109.1) et ladite unité de roue (105 ; 205 ; 305).

**15.** Unité de train de roulement selon la revendication 13 ou 14, dans laquelle

- ledit agencement de liaison de torsion (112, 113 ; 212, 213 ; 312, 313) comprend une unité d'éléments en feuille (212, 213 ; 312, 313) comprenant au moins un élément en feuille (220, 221 ; 320, 321) intégrant au moins une partie dudit premier élément de ressort (212.4 ; 312.4) et/ou au moins une partie dudit deuxième élément de ressort (212.5 ; 312.5) et au moins une partie dudit premier élément de support (212.1 ; 312.1) et/ou au moins un une partie dudit deuxième élément de support (112.2),
dans laquelle, notamment,

- ledit au moins un élément en feuille (220, 221 ; 320, 321) est découpé, notamment découpé à l'emporte-pièce et/ou découpé au laser, et/ou découpé au jet d'eau pour former ledit premier élément ressort (212.4 ; 312.4 ) et/ou ledit second élément élastique (212.5 ; 312.5)
et/ou
- ladite unité d'éléments en feuille (212, 213 ; 312, 313) comprend une pluralité desdits éléments en feuille (220, 221 ; 320, 321) empilés le long de ladite direction axiale pour former ledit agencement de liaison;
et/ou
- ladite première masse de réduction des vibrations de torsion (108.1) est couplée à ladite unité de roue (205 ; 305) via au moins un premier agencement de liaison de torsion (212, 213 ; 312, 313) et ladite deuxième masse de réduction des vibrations de torsion (109.1) est couplée à ladite unité de roue (205 ; 305) via au moins un deuxième agencement de liaison en torsion (212, 213 ; 312, 313), ledit premier agencement de liaison en torsion (212, 213 ; 312, 313) comprenant un nombre différent desdits éléments de feuille ( 220, 221 ; 320, 321) empilés le long de ladite direction axiale que ledit deuxième agencement de liaison de torsion (112, 113 ; 212, 213 ; 312, 313) pour fournir ledit décalage entre ladite première fréquence de résonance de réduction et ladite deuxième fréquence de résonance de réduction.

16. Unité de train de roulement selon l'une quelconque des revendications 1 à 15, dans laquelle

- ladite première masse de réduction des vibrations de torsion (108.1 ; 122.1) est couplée à un élément d'âme (105.4 ; 122.3) de ladite unité de roue (105 ; 205 ; 305) sur un premier côté axial dudit élément d'âme (105.4 ; 122.3) et ladite seconde masse de réduction des vibrations de torsion (109.1 ; 122.2) est couplée à ladite unité de roue (105 ; 205 ; 305) sur un second côté axial dudit élément d'âme (105.4 ; 122.3) ;
- ladite première masse de réduction des vibrations de torsion (108.1) et ladite deuxième masse de réduction des vibrations de torsion (109.1) étant couplées le long de ladite direction axiale par un agencement de liaison axiale (117),
dans laquelle, notamment,
- ledit élément d'âme (105.4) est un élément d'âme de ladite roue (105.2) ;
et/ou
- ledit agencement de liaison axiale (117) permet un mouvement de torsion entre ladite première masse de réduction des vibrations de torsion (108.1 ; 122.1) et/ou ladite seconde masse de réduction des vibrations de torsion (109.1 ; 122.2) et ledit élément d'âme (105.4 ; 122.3) autour de ladite direction axiale ;
et/ou
- ledit agencement de liaison axiale est couplé audit élément d'âme (105.4 ; 122.3) d'une manière rigide en torsion autour dudit axe de rotation (105.3).

17. Unité de train de roulement selon l'une quelconque des revendications 1 à 16, dans laquelle

- au moins une troisième unité de masse de réduction des vibrations de torsion (118, 119) est prévue,
- ladite troisième unité de masse de réduction des vibrations de torsion (118, 119) comprenant une troisième masse de réduction des vibrations de torsion (118.1, 119.1) couplée à ladite unité de roue (105 ; 205 ; 305) d'une manière souple en torsion autour dudit axe de rotation (105.3) ;
- ladite troisième masse de réduction des vibrations de torsion (118.1, 119.1) étant configurée pour osciller autour dudit axe de rotation (105.3) en contre-phase par rapport à un composant de ladite unité de roue (105 ; 205 ; 305), en particulier, par rapport à ladite roue (105.2), pour réduire les vibrations de torsion de ladite unité de roue (105 ; 205 ; 305) ;
- ladite troisième unité de masse de réduction des vibrations de torsion (118, 119) définissant une troisième fréquence de résonance de réduction de ladite oscillation en contre-phase de ladite troisième masse de réduction des vibrations de torsion (118.1, 119.1) ;
- ladite troisième fréquence de résonance de réduction étant du même ordre que ladite première fréquence de résonance de réduction et présente un autre décalage intentionnel par rapport à ladite première fréquence de résonance de réduction et/ou par rapport à ladite deuxième fréquence de résonance de réduction,
dans laquelle, notamment,
- ledit autre décalage intentionnel dépasse un décalage provoqué par des tolérances de fabrication maximales définies pour ladite unité de train de roulement ;
et/ou
- ledit décalage intentionnel entre ladite première fréquence de résonance de réduction et ladite deuxième fréquence de résonance de réduction est un premier décalage intentionnel et ledit autre décalage intentionnel est un deuxième décalage, ledit deuxième décalage étant de 10 % à 90 %, de préférence de 25 % à 75 %, plus préférablement 40 % à 60 %, dudit premier décalage intentionnel ;
et/ou
- ladite troisième fréquence de résonance de réduction est située entre ladite première fréquence de résonance de réduction et ladite deuxième fréquence de résonance de réduction.

18. Train roulant, notamment pour véhicule ferroviaire, avec au moins une unité de train roulant selon l'une quelconque des revendications 1 à 17.

19. Procédé de réduction des vibrations de torsion dans une unité de train de roulement, en particulier pour une véhicule ferroviaire, comprenant une unité de roue (105 ; 205 ; 305), une première masse de réduction des vibrations de torsion (108.1) et une seconde masse de réduction des vibrations de torsion (109.1 ), ladite unité de roue (105 ; 205 ; 305) comprenant un arbre d'unité de roue (105.1) et au moins une roue (105.2) configurée pour rouler sur une voie, ledit arbre d'unité de roue (105.1) définissant un axe de rotation (105.3), ledit axe de rotation (105.3) définissant une direction axiale et une direction radiale de ladite unité de roue (105 ; 205 ; 305) et une direction de torsion autour dudit axe de rotation (105.3), ledit procédé comprenant :

- accoupler ladite roue (105.2) audit arbre d'unité de roue (105.1) d'une manière rigide en torsion autour dudit axe de rotation (105.3) ;
- coupler ladite première masse de réduction des vibrations de torsion (108.1) et ladite deuxième masse de réduction des vibrations de torsion (109.1) à ladite unité de roue (105 ; 205 ; 305) d'une manière souple en torsion autour dudit axe de rotation (105.3), de sorte que chacune puisse osciller autour dudit axe de rotation (105.3) en contre-phase par rapport à un composant de ladite unité de roue (105 ; 205 ; 305), en particulier, par rapport à ladite roue (105.2), pour réduire les vibrations de torsion de ladite unité de roue (105 ; 205 ; 305) ;
- ladite unité de roue (105) ayant un état non usé où ladite unité de roue (105) a une fréquence de résonance de vibrations de torsion,
- ledit couplage de ladite première masse de réduction des vibrations de torsion (108.1) définissant une première fréquence de résonance de réduction de ladite oscillation en contre-phase de ladite première masse de réduction des vibrations de torsion (108.1) ;

**caractérisé en ce que**

- ledit couplage de ladite deuxième masse de réduction des vibrations de torsion (109.1) définit une deuxième fréquence de résonance de réduction de ladite oscillation en contre-phase de ladite deuxième masse de réduction des vibrations de torsion (109.1), qui est du même ordre que ladite première fréquence de résonance de réduction et a un décalage intentionnel par rapport à ladite première fréquence de résonance de réduction, ledit décalage intentionnel dépassant un décalage provoqué par des tolérances de fabrication maximales définies pour ladite unité de train de roulement.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10336729 A1
- EP 1551646 B1, Bieker
- US 4392681 A